# EUROPÄISCHE PATENTSCHRIFT

(11) **EP 3 653 478 B1**
(45) Veröffentlichungstag und Bekanntmachung des Hinweises auf die Patenterteilung: **21.07.2021**
(21) Anmeldenummer: 19207545.5
(22) Anmeldetag: 06.11.2019
(51) Int. Cl.: B62K 7/04, B62K 15/00

(54) **LASTENFAHRRAD**
CARGO BIKE
VÉLO CARGO

(30) Priorität: 15.11.2018 DE 102018128629
(43) Veröffentlichungstag der Anmeldung: 20.05.2020
(73) Patentinhaber: Frey, Patrick, 30453 Hannover (DE)
(72) Erfinder: Frey, Patrick, 30453 Hannover (DE)
(74) Vertreter: Holz, Christian

(56) Entgegenhaltungen:
- EP-A1- 3 100 938
- DE-A1-102014 110 261
- US-A1- 2007 252 356

## Beschreibung

Die vorliegende Erfindung betrifft ein Lastenfahrrad gemäß des Oberbegriffs des Patentanspruchs 1.

Fahrräder werden seit langem und in vielen Ländern zur Fortbewegung von üblicherweise einer Person verwendet. Ein Fahrrad weist üblicherweise zwei Räder auf, welche in der Längsrichtung bzw. in der Bewegungsrichtung hintereinander angeordnet sind und entsprechend als Vorderrad und als Hinterrad bezeichnet werden können. Jedes Rad weist einen üblicherweise luftgefüllten Gummireifen auf, welcher radial von Speichen oder dergleichen gestützt wird. Die Speichen laufen an einer Welle zusammen, welche drehbar gegenüber einem Rahmen gelagert ist. Der Rahmen verbindet die beiden Räder miteinander. Dabei weist der Rahmen ein vorderes Rahmenteil auf, welches das Vorderrad beidseitig an dessen Welle mit einer Gabel aufnimmt. An dem oberen Ende einer Lenkstange weist das vordere Rahmenteil einen Lenkbügel auf, welcher üblicherweise einen Handgriff zur Betätigung wenigstens einer Bremse besitzt, welche z.B. an der Gabel des vorderen Rahmenteils angeordnet sein kann. Das vordere Rahmenteil wird drehbeweglich von einem hinteren Rahmenteil gehalten, indem die Lenkstange durch ein Führungselement des hinteren Rahmenteils hindurch geführt wird. Das hintere Rahmenteil weist ferner einen Sattel auf, auf dem ein Benutzer sitzen kann, sowie Pedale, welche vom Benutzer mit den Füßen getreten werden können. Die Tretbewegung des Benutzers kann üblicherweise über eine Kette auf das Hinterrad übertragen werden, um die Fortbewegung des Fahrrads in der Bewegungsrichtung zu ermöglichen. Am hinteren Rahmenteil können eine weitere Bremse für das Hinterrad sowie ein Fahrradständer vorhanden sein.

Sollen zusätzlich Waren mit einem Fahrrad transportiert werden, so kann dies in geringem Umfang z.B. mittels eines Gepäckträgers erfolgen, welcher üblicherweise oberhalb des Hinterrads an dem hinteren Rahmenteil vorgesehen ist. Auch sind Fahrradtaschen bekannt, welche seitlich vom Hinterrad angeordnet werden können. Dies stellt jedoch sehr begrenzte Transportmöglichkeiten hinsichtlich des Gewichts und insbesondere hinsichtlich des Volumens dar. Auch müssen Waren auf dem Gepäckträger und insbesondere in den Fahrradtaschen sicher befestigt bzw. verstaut werden, so dass die Waren umständlich zu erreichen sind.

Daher sind seit längerem sog. Lastenräder bekannt, welche auch als Transporträder, Transportfahrräder oder Lastenfahrräder bezeichnet werden können. Hierbei handelt es sich im einfachsten Falle um Fahrräder mit einer weiteren Möglichkeit zur Aufnahme von Waren mittels eines Aufnahmeelements z.B. in Form eines Korbes oberhalb des Vorderrads, welches starr an dem vorderen Rahmenteil angeordnet und z.B. mit der Lenkstange verbunden ist. Dies kann die Menge, das Gewicht und bzw. oder das Volumen der zu transportierenden Waren zwar erhöhen, jedoch nur in einem begrenzten Maße.

Sollen größere Warenmengen bzw. schwerere und bzw. oder größere Waren oder auch Personen wie z.B. Kinder mit einem Lastenrad befördert werden, so sind Lastenräder bekannt, bei denen das vordere Rahmenteil derart ausgebildet ist, so dass die Gabelaufnahme der Gabel für das Vorderrad in der Längsrichtung zur Lenkstange beabstandet wird. In dem Zwischenraum zwischen Gabelaufnahme und Lenkstange erstreckt sich das vordere Rahmenteil abschnittsweise länglich etwa auf der Höhe der Welle des Vorderrads. Dort kann je nach Ausführung des Lastenrads ein entsprechendes Aufnahmeelement wie z.B. eine Ladefläche, ein Korb, eine Sitzmöglichkeit oder dergleichen angeordnet sein. Die Übertragung der Lenkbewegung des Lenkbügels auf das Vorderrad kann über eine Lenkeinrichtung z.B. in Form eines Lenkgestänges des vorderen Rahmenteils erfolgen.

Beispielweise zeigt die CA 2 657 836 A1 ein rekonfigurierbares Transportrad, welches durch den Austausch des Aufnahmeelements zwischen einem schließbaren Transportkasten und einer abdeckbaren Kabine für den Transport sowohl von Waren als auch von Kindern oder Haustieren verwendet werden kann.

Die DE 20 2017 104 098 U1 beschreibt ein Lastenfahrrad mit einem mittels eines Kettengetriebes von einem Kettenblatt mit zwei Pedalkurbeln angetriebenen Hinterrad, mit einem in einer Gabel drehbar gelagerten Vorderrad und mit einem Rahmen, an dem, in Fahrtrichtung von vorn nach hinten, die Gabel, ein Lenkbügel, das Kettenblatt mit den Pedalkurbeln sowie das Hinterrad drehbar gelagert sind. Ferner weist das Lastenrad einen Sattel hinter dem Lenkbügel und eine Ladevorrichtung auf, die mindestens teilweise zwischen dem Vorderrad und dem Lenkbügel befestigt ist. Auch ist eine Lenkschubstange vorhanden, die die Drehbewegung des Lenkbügels auf die Gabel als deren Drehbewegung überträgt. Die Ladevorrichtung weist eine linke und eine rechte seitliche Begrenzungswange auf, die aus einer zusammengefalteten raumsparenden Stauposition seitlich nach außen in eine Ladeposition schwenkbar sind. In der Ladeposition lässt sich eine Kindersitzvorrichtung in der Ladevorrichtung anbringen.

Derartige Transportfahrräder allgemein sowie das Transportrad der CA 2 657 836 A1 bzw. das Lastenrad der DE 20 2017 104 098 U1 weisen jedoch auch Nachteile auf. So kann das Fahren für den Benutzer schwerfälliger sein, da die Länge des Transportrads zu einem erhöhten Gewicht führen kann. Das vergleichsweise große Gewicht kann für den Benutzer auch beim Schieben, beim Abstellen, beim Anheben sowie beim Umdrehen z.B. zwecks Wartung oder Reparatur und dergleichen störend sein.

Auch kann das Lenken durch den vergleichsweise großen Achsabstand zwischen Vorderrad und Hinterrad für den Benutzer schwerfälliger und umständlicher sein als bei "normalen" Fahrrädern mit einem geringeren Achsabstand. Der vergleichsweise große Achsabstand führt auch zu einem vergleichsweise großen Lenkradius des Transportrads, so dass das Rangieren für den Benutzer aufwändiger sein kann. Die vergleichsweise große Länge kann auch beim Abstellen des Transportrads störend sein, da entsprechend viel Platz ein Anspruch genommen wird. Entsprechende Abstellmöglichkeiten können weniger zur Verfügung stehen als für übliche Fahrräder, was die Benutzung derartiger Transporträder einschränken kann. Insbesondere das Abstellen des Transportrads z.B. in beengten Situationen wie z.B. einem Keller, einem Hausflur und dergleichen kann aufgrund der vergleichsweise großen Länge für den Benutzer unhandlich sein.

Dies kann auch für die Breite des Aufnahmeelements gelten, welches üblicherweise mit dem vorderen Rahmenteil fest verbunden und lediglich durch Demontage lösbar ist. Ist das Aufnahmeelement wie bei dem Transportrad der CA 2 657 836 A1 austauschbar, so kann die Breite zwar durch Entfernen des Aufnahmeelements reduziert werden, jedoch ist z.B. der Transportkasten hierfür vom Benutzer zu handhaben und muss dann einzeln verstaut werden. Bei dem Lastenrad der DE 20 2017 104 098 U1 lässt sich zwar die Ladevorrichtung durch Schwenken bzw. durch Zusammenfalten ihrer seitlichen Begrenzungswangen in die raumsparende Stauposition in der Breite reduzieren. Dies bedeutet für den Benutzer jedoch einen nicht unerheblichen Aufwand, da zuvor die Kindersitzvorrichtung entfernt werden muss. Auch ist die entfernte Kindersitzvorrichtung vom Benutzer zu handhaben und muss dann einzeln verstaut werden.

Zu beachten ist auch, dass derartige Transporträder aufgrund ihrer vergleichsweise großen Länge gar nicht bzw. nur eingeschränkt transportfähig sind. So sind keine Fahrradträger für Personenkraftwagen (Pkw) auf dem Markt verfügbar, welche ein Transportrad einer derartigen Länge bzw. mit einem derartigen Radstand, d.h. mit einem derartigen Abstand in der Längsrichtung zwischen den beiden Rädern, aufnehmen können.

Die DE 10 2014 110 261 A1, welche die Präambel des Anspruchs 1 zeigt, beschreibt ein Lastenfahrrad mit einem Vorderrad, einem Hinterrad, einem ersten Rahmenteil zur Anordnung von Sattel, Lenkstange, Tretlager, Tretkurbeln und Pedalen und einem zweiten Rahmenteil mit einer in Benutzungsposition ebenen Ladefläche. Die Ladefläche ist gelenkig am zweiten Rahmenteil angeordnet und in einer Ruheposition in eine aufgestellte Lage geschwenkt. Das zweite Rahmenteil weist Verbindungsmittel mit dem ersten Rahmenteil auf, mittels derer es aus einer Benutzungsposition mit einem langen Radstand in eine verkürzte Ruheposition mit einem kurzen Radstand verstellbar ist.

Die EP 3 015 352 A1 beschreibt ein Lastenfahrrad, bei dem das vordere Rahmenteil teleskopartig in das hintere Rahmenteil eingeschoben werden kann. Das vordere Rahmenteil erstreckt sich hierzu oberhalb des Vorderrads bzw. der Gabel. Oberhalb des vorderen Rahmenteils ist ein Gitter als Aufnahmeelement angeordnet, welche durch umklappen halbiert werden kann. Um das Gitter ausklappen zu können, kann das vordere Rahmenteil aus dem hinteren Rahmenteil in eine erste ausgefahrene Position gezogen werden, in der die Gabel von dem Lenkbügel in der Längsrichtung beabstandet ist. Wird das Gitter umgeklappt, so kann das vordere Rahmenteil in das hintere Rahmenteil eingeschoben und in eine zweite zurückgezogene Position bewegt werden, in der sich die Gabel nahe dem Lenkbügel befindet. Hierdurch kann das Gitter zwischen zwei Flächen variiert werden. Gleichzeitig kann die Länge des Fahrrads zwischen zwei Stellungen verändert werden.

Die Lastenfahrräder der DE 10 2014 110 261 A1 und der EP 3 015 352 A1 können zwar die Nachteile, die sich aus einer starren vergleichsweise großen Länge eines Transportrads ergeben, durch ihre Veränderbarkeit in der Länge reduzieren, dies führt jedoch bei dem Lastenfahrrad der DE 10 2014 110 261 A1 dazu, dass die Möglichkeit zur Beförderung von Waren verloren geht, da das Aufnahmeelement im zusammengeklappten Zustand nicht mehr nutzbar ist. Bei dem Lastenfahrrad der EP 3 015 352 A1 bleibt im verkürzten Zustand zwar die halbe Ladefläche zur Nutzung übrig, jedoch kann das Lastenfahrrad der EP 3 015 352 A1 lediglich mit voller und mit halber Ladefläche genutzt werden.

Eine Aufgabe der vorliegenden Erfindung ist es, ein Lastenfahrrad der eingangs beschriebenen Art bereit zu stellen, so dass die zuvor beschriebenen Nachteile überwunden oder zumindest reduziert werden können. Insbesondere soll die Nutzbarkeit der Ladefläche verbessert werden. Ganz besonders soll die Ladefläche in verschiedenen Längen des Lastenrads zur Verfügung stehen können. Zumindest soll eine Alternative zu bekannten Lastenrädern geschaffen werden.

Die Aufgabe wird erfindungsgemäß durch ein Lastenfahrrad mit den Merkmalen des Patentanspruchs 1 gelöst. Vorteilhafte Weiterbildungen sind in den Unteransprüchen beschrieben. Somit betrifft die vorliegende Erfindung ein Lastenfahrrad mit einem Rahmen mit einem vorderen Rahmenteil und mit einem hinteren Rahmenteil und mit einem Aufnahmeelement zur Aufnahme von Lasten, wobei die beiden Rahmenteile gegenüber einander in der Längsrichtung derart beweglich ausgebildet sind, so dass das Lastenrad in seiner Länge veränderlich ist.

Unter einer aufzunehmenden Last sind insbesondere Waren, wie zum Beispiel Pakete, Körbe, Kisten und dergleichen, zu verstehen, welche heutzutage bereits üblicherweise mit Lastenrädern transportiert werden. Eine Last kann jedoch auch eine Person und insbesondere ein Kind sein, welches mit dem Lastenrad chauffiert werden soll. Dies kann ebenso für Haustiere wie insbesondere Hunde und Katzen gelten, welche in dem Aufnahmeelement als Last aufgenommen werden können. Das Aufnahmeelement kann je nach Ausbildung auch als Ladefläche, als Ladewanne, als Ladekorb, als Ladekiste und dergleichen bezeichnet werden.

Das erfindungsgemäße Lastenfahrrad ist dadurch gekennzeichnet, dass das Aufnahmeelement ein vorderes Aufnahmeelementteil aufweist, welches mit dem vorderen Rahmenteil unbeweglich verbunden und mittels des vorderen Rahmenteils mit dem hinteren Rahmenteil beweglich verbunden ist, und dass das Aufnahmeelement ein hinteres Aufnahmeelementteil aufweist, welches mit dem hinteren Rahmenteil unbeweglich verbunden und mittels des hinteren Rahmenteils mit dem vorderen Rahmenteil beweglich verbunden ist, so dass das Aufnahmeelement aufgrund der Beweglichkeit der beiden Rahmenteile zueinander in seiner Länge veränderlich ist. Unter einer Verbindung ist hierbei eine unbewegliche Verbindung zu verstehen, sodass das vordere Rahmenteil und das vordere Aufnahmeelementteil gemeinsam miteinander beweglich sind; dies gilt entsprechend für das hintere Rahmenteil und das hintere Aufnahmeelementteil.

Mit anderen Worten wird bei dem erfindungsgemäßen Lastenrad ein zweiteiliges Aufnahmeelement vorgesehen, welches einen vorderen Aufnahmeteil und einen hinteren Aufnahmeteil aufweist. Das vordere Aufnahmeteil wird dabei mit dem vorderen Rahmenteil derart verbunden, dass diese beiden Teile miteinander gemeinsam beweglich sind. Vergleichbar wird das hintere Aufnahmeteil mit dem hinteren Rahmenteil verbunden, so dass auch diese beiden Teile miteinander beweglich sind. Werden nun die beiden Rahmenteile in der Längsrichtung bzw. Bewegungsrichtung des Lastenrades zueinander in ihrer Position verändert, so kommt es hierdurch auch zu einer Veränderung der Position der beiden Aufnahmeteile in der Längsrichtung bzw. Bewegungsrichtung zueinander; dies geschieht im gleichen Maße. Hierdurch kann die Längenveränderlichkeit des Lastenrades auf dessen Aufnahmeelement übertragen werden, welches entsprechend seine Länge mit ändert. Hierdurch kann ein Aufnahmeelement geschaffen werden, welches ebenso stufenlos oder in Stufen seine Länge ändern kann, wie dies durch den Rahmen des Lastenrades selbst erfolgt. Eine stufenlose Veränderbarkeit der Länge kann den Vorteil bieten, die Länge des Lastenrads und des Aufnahmeelements sehr flexibel den Bedürfnissen des Benutzers anpassen zu können. Dies kann in jedem zu einer Veränderbarkeit des Aufnahmeelements in einer größeren Anzahl von verschiedenen Längen als bisher bekannt führen. Hierdurch kann die Nutzbarkeit des Aufnahmeelements gegenüber bekannten Lastenrädern verbessert werden. Auch kann die Nutzbarkeit eines flexibel veränderbaren Aufnahmeelements mit einer vergleichsweise geringen Länge mit den verbesserten Eigenschaften eines verkürzten Lastenrades kombiniert werden, wie zuvor beschrieben.

Entsprechend der Erfindung weist das vordere Aufnahmeelementteil ein Bodenelement und das hintere Aufnahmeelementteil ein Bodenelement auf, wobei das Bodenelement des vorderen Aufnahmeelementteils oberhalb des Bodenelements des hinteren Aufnahmeelementteils angeordnet ist, oder umgekehrt.

Somit weist das Aufnahmeelement zur Ausbildung einer Ladefläche einen in der Längsrichtung durchgängigen Boden auf, welcher ein Bodenelement des vorderen Aufnahmeelementteils und ein Bodenelement des hinteren Aufnahmeelementteils aufweist, vorzugsweise hieraus besteht. Hierdurch kann eine Fläche geschaffen werden, welche das Aufnahmeelement nach unten hin begrenzt. Die beiden Bodenelemente der Aufnahmeelementteile können hierzu vollflächig geschlossen ausgebildet sein, um eine entsprechend geschlossene Oberfläche zu bilden. Es ist jedoch auch denkbar, beide Bodenelemente oder auch nur ein Bodenelement in Form eines Gitters oder in Form einer gelochten bzw. perforierten Oberfläche eines ansonsten geschlossenen Bodenelements auszubilden. Hierdurch kann insbesondere der Ablauf von Flüssigkeiten wie z.B. Regenwasser ermöglicht werden.

In jedem Fall kann die Längenveränderlichkeit des Aufnahmeelements dadurch realisiert werden, dass die beiden Bodenelemente übereinander in der Längsrichtung geschoben werden können und somit in der Höhe übereinander angeordnet sind. Dies kann eine Längenveränderlichkeit des Aufnahmeelements in dem Maße ermöglichen, wie die beiden Rahmenteile in der Längsrichtung gegeneinander verschiebbar sind. Diese Verschiebbarkeit der beiden Rahmenteile in der Längsrichtung gegeneinander kann z.B. durch einen Begrenzungsbolzen als Anschlag begrenzt werden.

Die beiden Bodenelemente können lose übereinander angeordnet sein, um die zuvor beschriebenen Eigenschaften zu ermöglichen. Vorzugsweise können die beiden Bodenelemente gegenüber einander auch eine Führung aufweisen, indem zum Beispiel ein Bodenelement in der Querrichtung randseitig das andere Bodenelement umgreift, so dass eine schienenartige Führung der Bewegung in der Längsrichtung ermöglicht wird. Dies kann eine sichere Führung ermöglichen sowie ein Anheben der beiden Bodenelemente gegenüber einander in der Höhe vermeiden, zum Beispiel durch das Eindringen von Verschmutzungen und dergleichen.

Gemäß eines weiteren Aspekts der vorliegenden Erfindung weist das vordere Aufnahmeelementteil ein erstes Seitenelement und ein zweites Seitenelement auf, welche in der Querrichtung zueinander beabstandet und einander gegenüberliegend beidseitig des Bodenelements angeordnet sind, und das hintere Aufnahmeelementteil weist ein erstes Seitenelement und ein zweites Seitenelement auf, welche in der Querrichtung zueinander beabstandet und einander gegenüberliegend beidseitig des Bodenelements angeordnet sind, wobei die Seitenelemente des vorderen Aufnahmeelementteils innerhalb der Seitenelemente des hinteren Aufnahmeelementteils angeordnet sind, oder umgekehrt.

Mit anderen Worten ist das Aufnahmeelement gemäß diesem Aspekt der vorliegenden Erfindung wannenartig ausgebildet, indem zusätzlich zu dem jeweiligen Bodenelement des vorderen Aufnahmeelementteils bzw. des hinteren Aufnahmeelementteils jeweils zwei Seitenelemente vorgesehen sind, welche sich von dem jeweiligen Bodenelement zumindest abschnittsweise, vorzugsweise im Wesentlichen, in der Höhe nach oben erstrecken und hierdurch jeweils einen Teilbereich einer Seitenwand einer Wanne ausbilden. Die beiden Seitenelemente können auch jeweils als linkes und rechtes Seitenelement bezeichnet werden. Hierdurch kann durch jedes Aufnahmeelementteil ein Teilbereich einer Wanne ausgebildet werden, so dass beide Aufnahmeelementteile zusammen ein wannenartiges Aufnahmeelement ausbilden können, welches wie zuvor beschrieben in seiner Länge veränderlich sein kann. Dabei kann ein Aufnahmeelementteil innerhalb des anderen angeordnet sein, um eine gegenseitige Blockade einer Bewegung in der Längsrichtung aufeinander zu gerichtet zu verhindern. Das hintere Aufnahmeelementteil ist dabei vorzugsweise in der Querrichtung außerhalb des vorderen Aufnahmeelementteils angeordnet.

Wie zuvor hinsichtlich der Bodenelemente beschrieben, können auch die beiden Aufnahmeelementteile in diesem Fall lose gegeneinander verschieblich sein. Es kann jedoch zu bevorzugen sein, dass die oberen Kanten der Seitenelemente eines Aufnahmeelementteils die korrespondierenden Kanten der Seitenelemente des anderen Aufnahmeelementteils in der Höhe von oben umgreifen können, um eine schienenartige Führung und hiermit Stabilität in der Schiebebewegung gegeneinander realisieren zu können. Durch die wannenartige Ausbildung des Aufnahmeelements kann der Transport von Waren und insbesondere von losen Waren bzw. kleinstückigen Waren verbessert werden.

Gemäß eines weiteren Aspekts der vorliegenden Erfindung weist das vordere Aufnahmeelementteil ein Querelement auf, welches mit dem vorderen Rahmenteil verbunden ist, und das hintere Aufnahmeelementteil weist ein Querelement auf, welches mit dem hinteren Rahmenteil verbunden ist, wobei die Seitenelemente des vorderen Aufnahmeelementteils und die Seitenelemente des hinteren Aufnahmeelementteils jeweils einen Querbereich aufweisen, welcher gegenüber dem jeweiligen Querelement in der Querrichtung derart beweglich ausgebildet ist, so dass das Aufnahmeelement in seiner Breite veränderlich ist.

Mit anderen Worten sind die beiden Aufnahmeelementteile derart ausgebildet, dass ihre Seitenelemente gegenüber einem jeweils feststehenden Querelement des jeweiligen Rahmenteils in der Querrichtung beweglich sind. Hierdurch können die beiden Seitenelemente jedes Aufnahmeelementteils in der Querrichtung gegenüber dem jeweiligen Querelement bewegt werden, was zu einer Verbreiterung bzw. Breitenreduzierung des Aufnahmeelements als Ganzes führen kann. Hierdurch kann zusätzlich zur Längenveränderlichkeit des Aufnahmeelements auch eine Breitenveränderlichkeit ermöglicht werden.

Die seitliche Beweglichkeit der Seitenelemente gegenüber dem jeweiligen Querelement kann beispielsweise dadurch erreicht werden, dass die Seitenelemente in Querrichtung verlaufende Langlöcher aufweisen, in welche jeweils ein Bolzen oder dergleichen eines Querelements eingreift, wobei dieser das Seitenelement auch rückseitig der länglichen Öffnung halten kann. Auf diese Art und Weise kann das Seitenelement mit seiner länglichen Öffnung entlang des Bolzens in der Querrichtung zwischen jeweils einem inneren und äußeren Anschlag verschoben werden, welcher jeweils die Bewegung begrenzt. Die Beweglichkeit in der Querrichtung kann dabei derart bemessen sein, dass das Seitenelement auch in einem maximal ausgezogenen seitlichen Zustand sicher von dem Querelement gehalten werden kann. In der eingeschobenen Richtung kann gleichzeitig das Seitenelement so weit eingeschoben werden, bis es mit seiner Innenfläche an einer Kante des Querelements anschlägt.

Dabei können die beiden Seitenelemente eines Aufnahmeelementteils vorzugsweise auf derselben Seite des Querelements angeordnet sein, was die Ausführung der Relativbewegung vereinfachen und den optischen Eindruck für den Benutzer insbesondere dann verbessern kann, wenn die zuvor beschriebene Schiebemechanik durch das Querelement verborgen wird. Dies kann jedoch die seitliche Beweglichkeit der Seitenelemente begrenzen, da diese im eingeschobenen Zustand gegeneinander anstoßen können.

Um dies zu vermeiden, können die beiden Seitenelemente bei einem Querelement zum einen auf der einen Seite und zum anderen auf der gegenüberliegenden Seite angeordnet sein, so dass die Seitenelemente aneinander vorbeigeführt werden und sich hierdurch nicht berühren können. Hierdurch kann die seitliche Verschieblichkeit der Seitenelemente in einem größeren Maße erfolgen, so dass auch die Maße der Breitenveränderung des Aufnahmeelements vergrößert werden können.

In jedem Fall kann gegenüber bekannten Lastenrädern die Nutzung der Ladefläche deutlich verbessert werden, da in diesem Fall auch eine Breitenveränderung ermöglicht wird, wobei die Fläche bzw. das Volumen des Aufnahmeelements in jeder Breite nutzbar ist. Dies kann insbesondere sehr einfach und schnell für den Benutzer erfolgen, was die Nutzung attraktiv gestalten kann. Auch sind keine Elemente einzufügen und bzw. oder zu entfernen, um die Ladefläche in ihrer Größe und Breite zu nutzen bzw. um die Ladefläche zu reduzieren. Auch kann das seitliche Verändern des Aufnahmeelements stufenlos erfolgen, so dass auch in diesem Fall eine sehr flexible Nutzung der Ladefläche ermöglicht wird.

Hierbei kann es vorteilhaft sein, wenigstens eine Markierung jeweils an den Seitenelementen bzw. dessen Querelementen und bzw. oder an den Bodenelementen vorzusehen, um das Maß der eingestellten Breite für den Benutzer erkennbar bzw. ablesbar darzustellen. Dies kann die Vornahme einer gewünschten Breiteneinstellung und insbesondere einer symmetrischen Breiteneinstellung für den Benutzer vereinfachen.

In der zuvor beschriebenen Mechanik der seitlichen Verschieblichkeit können entsprechende Spann- bzw. Klemmmittel vorgesehen sein, so dass eine eingenommene Positionierung eines Seitenelements gegenüber dem Querelement jeweils fixiert und sicher gehalten werden kann. Dabei besteht auch die Möglichkeit, die beiden Seitenelemente gegenüber dem jeweiligen Querelement unterschiedlich in der Breite zu verschieben, um gegebenenfalls auch ein ungleichmäßig breites Aufnahmeelement zu erhalten. Zu bevorzugen kann es seitens des Benutzers jedoch sein, die Breite des Aufnahmeelements gegenüber der Längsachse des Lastenrades gleichmäßig einzuhalten, was einer einfacheren Ausbalancierung des Lastenrades zugutekommen kann.

Die Veränderlichkeit des Aufnahmeelements in der Breite kann insbesondere das Abstellen eines erfindungsgemäßen Lastenrades im ungenutzten Zustand vereinfachen, weil hierdurch weniger Raum in Anspruch genommen wird. Auch kann es für manche zu transportierende Lasten ausreichend sein, das Aufnahmeelement mit einer vergleichsweise geringen Breite zu nutzen, was auch während der Fahrt für den Benutzer einfacher und komfortabler sein kann. Insbesondere kann ein vergleichsweise schmales Aufnahmeelement das Ausbalancieren und das Lenken für den Benutzer vereinfachen und damit die Dynamik des Fahrens erhöhen.

Gemäß eines weiteren Aspekts der vorliegenden Erfindung sind die Seitenelemente des vorderen Aufnahmeelementteils und die Seitenelemente des hinteren Aufnahmeelementteils in der Höhe jeweils zweigeteilt und gegenüber einander derart beweglich ausgebildet, so dass das Aufnahmeelement in seiner Höhe veränderlich ist.

Mit anderen Worten können die zuvor beschriebenen Eigenschaften sowie die mechanische Umsetzung einer Verschieblichkeit einzelner Elemente des Aufnahmeelements gegeneinander auch auf eine Veränderlichkeit des Aufnahmeelements in der Höhe angewendet werden. Hierzu können die zuvor beschriebenen Seitenelemente der beiden Aufnahmeelementteile entsprechend wenigstens zweigeteilt ausgebildet und gegenüber einander, wie zuvor gegenüber dem Querelement beschrieben, in der Höhe beweglich, verschiebbar sowie fixierbar sein. Dies kann es ermöglichen, das Aufnahmeelement des erfindungsgemäßen Lastenrades auch in der Höhe veränderlich zu gestalten, um das Aufnahmeelement auch in dieser Dimension an zu transportierende Lasten anpassen zu können. Auch kann hierzu im ungenutzten Zustand bzw. in einem Zustand einer ausreichenden geringeren Aufnahmeelementhöhe das Aufnahmeelement entsprechend flacher eingestellt werden. Dies kann insbesondere das Abstellen, Transportieren und Verstauen des Lastenrades für den Benutzer vereinfachen.

Gemäß eines weiteren Aspekts der vorliegenden Erfindung weist das vordere Aufnahmeelementteil und bzw. oder das hintere Aufnahmeelementteil ein Deckelelement auf, welches ausgebildet ist, das Aufnahmeelement von oben abzudecken, wobei das Deckelelement ein erstes Deckelelementteil und ein zweites Deckelelementteil aufweist, welche gegenüber einander in der Längsrichtung derart beweglich ausgebildet sind, so dass das Deckelelement in seiner Länge veränderlich ist.

Die Verwendung eines derartigen Deckelelements kann es grundsätzlich dem Benutzer ermöglichen, das Aufnahmeelement von oben abzudecken. Dies kann zum Beispiel dem Schutz der dort aufgenommenen Lasten vor Regen, Schnee, Sonne und dergleichen dienen. Auch kann das abgedeckte Aufnahmeelement die dort aufgenommenen Lasten vor Wind, vor Laubeintrag sowie vor sonstigem Schmutz und Dreck, welcher durch die Luft eingeweht werden kann, schützen. Des Weiteren können die im Aufnahmeelement aufgenommenen Lasten durch das Deckelelement auch vor einem unberechtigten Zugriff von Personen geschützt werden.

Das Deckelelement dabei in der Länge veränderlich auszubilden, kann es ermöglichen, das Deckelelement bei allen unterschiedlichen Längen nutzen zu können, welche durch das Lastenrad bzw. das Aufnahmeelement, wie zuvor beschrieben, eingenommen werden können. Auf diese Art und Weise kann eine durchgehende Nutzung der Vorteile und Eigenschaften des erfindungsgemäßen Lastenrads auch bei Verwendung des Deckelelements erfolgen.

Gemäß eines weiteren Aspekts der vorliegenden Erfindung ist das erste Deckelelementteil beweglich, vorzugsweise schwenkbar, mit dem vorderen Aufnahmeelementteil verbunden und bzw. oder das zweite Deckelelementteil ist beweglich, vorzugsweise schwenkbar, mit dem hinteren Aufnahmeelementteil verbunden.

Eine derartige relative Beweglichkeit wenigstens eines Deckelelementteils gegenüber einem Aufnahmeelementteil kann es ermöglichen, das Aufnahmeelement teilweise oder vollständig abzudecken bzw. das Deckelelement zu entfernen bzw. zu verschieben, um dem Benutzer einen Zugriff auf das Innere des Aufnahmeelements zu ermöglichen. Hierzu kann das Deckelelement abnehmbar ausgebildet sein, was eine einfache Umsetzung der zuvor beschriebenen Eigenschaften ermöglichen kann, es jedoch für den Benutzer erfordert, das Deckelelement handhaben und als separates Teil ablegen zu müssen.

Daher kann es zu bevorzugen sein, das Deckelelement bzw. die Deckelelementteile ganz oder teilweise mit dem Aufnahmeelementteil verbunden auszubilden, so dass eine relative Beweglichkeit erfolgen kann, um einen Zugriff auf den Inhalt des Aufnahmeelements zu ermöglichen, ohne jedoch das Deckelelement bzw. die Deckelelementteile separat handhaben und ablegen zu müssen. Dies kann beispielsweise durch eine Verschieblichkeit der Deckelelementteile derart erfolgen, dass ein Deckelelement relativ gegenüber den übrigen Teile des Aufnahmeelements verschoben wird und somit eine Lücke des ansonsten geschlossenen Aufnahmeelements geschaffen werden kann, durch welche der Innenraum des Aufnahmeelements vom Benutzer erreicht werden kann.

Alternativ oder zusätzlich kann die relative Beweglichkeit zumindest teilweise durch ein Verschwenken wenigstens eines Deckelelementteils erfolgen, was für den Benutzer eine intuitive Umsetzung der zuvor beschriebenen Eigenschaften bedeuten und einen schnellen und einfachen Zugriff auf den Inhalt des Aufnahmeelements ermöglichen kann. Hierbei kann es denkbar sein, dass beide Deckelelementteile jeweils beweglich bzw. schwenkbar gegenüber einem Aufnahmeelementteil ausgebildet und miteinander nicht verbunden sind, vergleichbar der Anordnung der Aufnahmeelementteile zueinander. Hierdurch könnte eine Längenveränderlichkeit der Deckelelementteile zueinander durch Verschieben gegeneinander vergleichsweise den Bodenelementteilen erfolgen. Gleichzeitig könnten die Deckelelementteile an ihrem einander jeweils abgewandten Ende mit dem jeweiligen Aufnahmeelementteil bzw. einem jeweiligen Querelement schwenkbar verbunden sein, so dass diese jeweils unabhängig voneinander hochgeklappt werden können. Durch die Überlagerung der beiden Deckelelementteile wäre hierbei eines der Deckelelementteile zuerst hochzuklappen, um das darunterliegende Deckelelementteil zum Schwenken freizugeben. Alternativ könnten die beiden Deckelelementteile auch schwenkbar gegenüber Seitenelementen der Aufnahmeelementteile verbunden sein, so dass ein seitliches Auf- und Zuschwenken der Deckelelementteile erfolgen könnte.

Es ist jedoch auch denkbar, die beiden Deckelelementteile vergleichbar den eingangs beschriebenen Bodenelementteilen zueinander beweglich vorzusehen, wobei diese zum Beispiel durch ein randseitiges Umgreifen in der Querrichtung schienenartig gegenüber einander definiert geführt werden können. Hierdurch könnte lediglich ein Deckelelementteil schwenkbar gegenüber einem Querelement eines Aufnahmeelementteils vorgesehen sein. Das andere Deckelelementteil könnte gegenüber dem schwenkbaren Deckelelementteil in der Länge an diesem entlang schienenartig verschieblich angeordnet sein. Hierdurch könnten beide Deckelelementteile miteinander verschwenkt werden und das nicht-schwenkbar befestigte Deckelelementteil könnte durch die längliche Verschiebbarkeit die Längenänderung des Lastenrades an sich auf das Deckelelement als Ganzes übertragen.

In jedem Fall können auf diese Art und Weise die zuvor beschriebenen Eigenschaften und Vorteile der Längenveränderlichkeit auch auf ein Deckelelement übertragen werden.

Gemäß eines weiteren Aspekts der vorliegenden Erfindung weist das erste Deckelelementteil ein Mittelelement auf, das erste Deckelelementteil weist ein erstes Seitenelement und ein zweites Seitenelement auf, welche in der Querrichtung zueinander beabstandet und einander gegenüberliegend beidseitig des Mittelelements angeordnet sind, das zweite Deckelelementteil weist ein Mittelelement auf, und das zweite Deckelelementteil weist ein erstes Seitenelement und ein zweites Seitenelement auf, welche in der Querrichtung zueinander beabstandet und einander gegenüberliegend beidseitig des Mittelelements angeordnet sind, wobei die Seitenelemente des ersten Deckelelementteils und die Seitenelemente des zweiten Deckelelementteils sind jeweils gegenüber dem jeweiligen Mittelelement in der Querrichtung derart beweglich ausgebildet, so dass das Deckelelement in seiner Breite veränderlich ist, wobei vorzugweise die Seitenelemente des ersten Deckelelementteils und die Seitenelemente des zweiten Deckelelementteils jeweils unterhalb des jeweiligen Mittelelements angeordnet sind.

Auf diese Art und Weise können die zuvor beschriebenen Eigenschaften eines in der Breite veränderlichen Aufnahmeelements auch auf das zuvor beschriebene Deckelelement übertragen werden. Vergleichbar werden auch hier einander in der Querrichtung gegenüberliegende Seitenelemente pro Deckelelement vorgesehen, welche vergleichbar den Seitenelementen und ihrer Verschieblichkeit gegenüber einem Querelement durch eine Schiebemechanik beispielsweise wie zuvor beschrieben querveränderlich angeordnet sind. Auf diese Art und Weise können die zuvor beschriebenen Eigenschaften einer Breitenveränderung des Aufnahmeelements auf das Deckelelement übertragen werden, so dass auch bei einem in der Querrichtung veränderlichen Aufnahmeelement ein Deckelelement genutzt werden kann.

Gemäß eines weiteren Aspekts der vorliegenden Erfindung ist das Deckelelement verschließbar ausgebildet.

Die Verschließbarkeit des Deckelelements kann dadurch erreicht werden, dass beispielsweise Verschlusselemente an dem Deckelelement vorgesehen sind, welche mit korrespondierenden Verschlusselementaufnahmen wenigstens eines der beiden Aufnahmeelementteile zusammenwirken können, oder umgekehrt. Hierdurch können zum Beispiel Spannelemente ausgebildet werden, welche korrespondierende Halterungen umgreifen bzw. hintergreifen oder in diese eingreifen können. Es können verschiedenartige Rastmechanismen und dergleichen verwendet werden, um eine Verschließbarkeit des Deckelelements gegenüber dem Aufnahmeelement bzw. dessen Aufnahmeelementteilen realisieren zu können.

Diese Schließmechanismen können zum Beispiel auch abschließbar, zum Beispiel mittels eines Schlüssels oder eines Vorhängeschlosses, ausgebildet sein, um ein sicher verschlossenes Deckelelement zu ermöglichen, so dass auch in Abwesenheit des Benutzers von dem Lastenrad die im Aufnahmeelement aufgenommenen Lasten gesichert und vor unbefugten Zugriffen Dritter geschützt werden können.

Gemäß eines weiteren Aspekts der vorliegenden Erfindung weist der vordere Rahmenteil eine vordere Teleskopstrebe und der hintere Rahmenteil eine hintere Teleskopstrebe auf, wobei die vordere Teleskopstrebe innerhalb der hinteren Teleskopstrebe verläuft, oder umgekehrt, so dass die beiden Rahmenteile gegenüber einander in der Längsrichtung teleskopartig beweglich und, vorzugsweise stufenlos, fixierbar sind, wobei vorzugsweise die vordere Teleskopstrebe wenigstens ein Schutzelement aufweist, welches feststehend an der vorderen Teleskopstrebe der hinteren Teleskopstrebe zugewandt angeordnet ist, oder umgekehrt, und wobei das Schutzelement ausgebildet ist, die Teleskopstreben gegenüber einander vor Abrieb zu schützen und bzw. oder die Reibung zwischen den Teleskopstreben zu erhöhen.

Mit anderen Worten wird eine Teleskopstrebe eines Rahmenteils innerhalb einer korrespondierenden Teleskopstrebe des anderen Rahmenteils aufgenommen, so dass diese in der Längsrichtung gegeneinander beweglich sind. Die dabei innenliegend verlaufende Teleskopstrebe erstreckt sich ausreichend lang innerhalb der außenliegenden Teleskopstrebe, so dass in jeder Positionierung in der Länge ein sicherer Halt zwischen den beiden Teleskopstreben gewährleistet ist.

Die beiden Teleskopstreben können beispielsweise durch einen Klemmmechanismus, welcher die Außenseite der innenliegende Teleskopstrebe gegen die Innenseite der außenliegenden Teleskopstrebe drückt, gegeneinander fixiert werden. Dies kann in diskreten Positionen, d.h. in Stufen, oder vorzugsweise stufenlos erfolgen, wobei letzteres eine besonders flexible Längenveränderung des Lastenrades ermöglichen kann. Durch Lösen des entsprechenden Befestigungsmechanismus kann die Beweglichkeit in der Längsrichtung hergestellt werden, so dass in diesem Zustand vom Benutzer die Längenänderung vorgenommen werden kann. Hierdurch kann eine einfache, sichere sowie haltbare und gleichzeitig ggfs. stufenlose Längenveränderlichkeit der beiden Rahmenteile gegenüber einander realisiert werden.

Auch können die einander zugewandten Oberflächen der beiden Teleskopstreben eine korrespondierende Profilierung aufweisen, z.B. in Form eines Zick-Zack-Musters, so dass die einzelnen Zacken ineinander eingreifen können. Dies führt zwar zu einer Einschränkung der Flexibilität bei der Positionierung der beiden Teleskopstreben gegenüber einander, so dass lediglich diskrete Positionierungen möglich sind. Jedoch kann der sonst lediglich kraftschlüssige Halt zwischen den gegeneinander fixierten Teleskopstreben durch einen zusätzlichen formschlüssigen Halt verstärkt werden.

Durch die Anordnung wenigstens eines Schutzelements, feststehend an der vorderen Teleskopstrebe sowie der hinteren Teleskopstrebe zugewandt, oder umgekehrt, können die beiden Teleskopstreben gegenüber einander vor Abrieb aufgrund des direkten Kontakts geschützt werden. Mit anderen Worten kann ein direkter Kontakt zwischen den beiden Teleskopstreben vermieden werden, indem das Schutzelement dazwischenliegend angeordnet wird. Zusätzlich oder alternativ kann das Schutzelement auch ausgebildet sein, die Reibung zwischen den Teleskopstreben zu erhöhen, so dass ein besserer Halt in der Längsrichtung erreicht werden kann.

Als Schutzelement kann hierzu vorzugsweise ein Hartgummiprofil verwendet werden, welches innerhalb des Zwischenraums zwischen den beiden Teleskopstreben angeordnet sein kann. Das Schutzelement kann sich ausreichend in der Längsrichtung erstrecken, um auch bei einer Längenänderung des Lastenrads seine Funktion ausüben zu können. Es können auch mehrere einzelne Schutzelemente verwendet werden, um gemeinsam diese Funktion auszuüben. Das Schutzelement kann vorzugsweise lediglich dort zwischen den beiden Teleskopstreben angeordnet werden, wo sich diese bei einer Festlegung der Länge des Lastenrads berühren könnten. Dies kann die gewünschte Funktion des Schutzelements genau an der Stelle ermöglichen, wo dieses seine Wirkung ausüben kann.

Gemäß eines weiteren Aspekts der vorliegenden Erfindung sind die Teleskopstreben zueinander korrespondierend trapezförmig ausgebildet.

Mit anderen Worten laufen die Seitenschenkel der beiden Teleskopstreben in der Höhe nach oben und bzw. oder nach unten in eine Richtung zueinander hin zu, so dass sich jeweils ein einfaches oder doppeltes trapezförmiges Profil der Teleskopstreben im Querschnitt ausbildet. Auf diese Art und Weise können durch das Befestigen der inneren Teleskopstrebe gegenüber der äußeren Teleskopstrebe die Außenflächen der Seitenschenkel der inneren Teleskopstrebe gegen die korrespondierenden Innenflächen der Seitenschenkel des äußeren Teleskoprohres gedrückt werden. Dies kann jeweils die Ausbildung einer Kontur vergleichbar einem Satteldach ermöglichen. Auf diese Art und Weise kann die Kontaktfläche zwischen den beiden Teleskoprohren erhöht werden, was generell die Klemmwirkung verbessern kann und insbesondere zu einer höheren Klemmwirkung auch bei schwankenden Toleranzen der Maße der beiden Teleskopstreben führen kann. Gerade in diesem Fall kann sichergestellt werden, dass die Klemmwirkung ausreichend ist, um die gewünschte Befestigung zwischen den beiden Teleskopstreben zu erreichen.

Gemäß eines weiteren Aspekts der vorliegenden Erfindung weist das Lastenrad wenigstens ein Fixierungselement zur, vorzugsweise stufenlosen, Fixierung der vorderen Teleskopstrebe in der hinteren Teleskopstrebe auf, oder umgekehrt.

Durch ein derartiges Fixierungselement kann eine Befestigung bzw. Arretierung der beiden Teleskopstreben gegenüber einander durch den Benutzer erfolgen und auch wieder aufgehoben werden, um im aufgehobenen bzw. gelösten Zustand die beiden Teleskopstreben gegeneinander in der Längsrichtung zu verschieben und hierdurch die entsprechende Längeneinstellung des Lastenrades wie gewünscht zu erreichen. Diese Längeneinstellung kann durch die Betätigung des Befestigungs- bzw. Fixierungselements gesichert bzw. arretiert werden. Durch die Verwendung von mehreren derartigen Fixierungselementen, welche vorzugsweise in der Längsrichtung zueinander beabstandet angeordnet sind, kann die fixierende bzw. arretierende Wirkung entsprechend erhöht werden.

Gemäß eines weiteren Aspekts der vorliegenden Erfindung weist das Fixierungselement ein Halterungselement auf, welches in einer korrespondierenden Führung der inneren Teleskopstrebe angeordnet ist, wobei das Halterungselement ausgebildet ist, in einem gelösten Zustand in der Führung der inneren Teleskopstrebe in der Längsrichtung beweglich und in einem arretierten Zustand in der Führung der inneren Teleskopstrebe in der Längsrichtung unbeweglich zu sein, wobei das Fixierungselement ausgebildet ist, die Beweglichkeit des Halterungselements in der Längsrichtung kraftschlüssig und bzw. oder formschlüssig zu verhindern. Die innere Teleskopstrebe kann entweder die vordere Teleskopstrebe oder die hintere Teleskopstrebe sein, je nachdem, welche Teleskopstrebe wie zuvor erläutert in welcher anderen Teleskopstrebe verläuft. Die andere Teleskopstrebe kann dann als äußere Teleskopstrebe bezeichnet werden. In jedem Fall kann auf diese Art und Weise eine einfache und sichere Beweglichkeit sowie Arretierbarkeit wie zuvor beschrieben umgesetzt werden. Dies kann mit einfachen mechanischen Mittel platzsparend und bzw. oder kostensparend erfolgen und gleichzeitig einen sicheren und verlässlichen Halt in der arretierten Länge bieten.

Dabei vorzugsweise das Halterungselement als Nutenstein und die Führung der inneren Teleskopstrebe als Nut auszubilden kann eine mechanisch besonders einfache Umsetzung ermöglichen, welche gleichzeitig eine besonders verlässliche Führung in der Längsrichtung ermöglichen kann. Auch kann der arretierte Zustand eine Beweglichkeit wirkungsvoll unterbinden.

Zusätzlich oder alternativ vorzugsweise das Halterungselement auszubilden, mittels eines Handgriffs mit Exzenterkopf gegenüber der äußeren Teleskopstrebe in einem arretierten Zustand gespannt und in einem gelösten Zustand entspannt zu werden, kann ein einfaches und wirkungsvolles Arretieren und Lösen ermöglichen, welches insbesondere für den Benutzer intuitiv, schnell und einfach umgesetzt werden kann. Auch können die mechanischen Mittel hierzu kostengünstig und bzw. oder platzsparend umgesetzt werden.

Werden mehrere derartige Fixierungselemente verwendet, so können deren Halterungselemente in derselben Führung der inneren Teleskopstrebe beweglich verlaufen, was den Aufwand der Umsetzung wenigstens eines zweiten Fixierungselements gegenüber dem ersten Fixierungselement gering halten kann.

Gemäß eines weiteren Aspekts der vorliegenden Erfindung weist das Lastenrad eine Lenkeinrichtung mit einem Lenkbügel, einer Lenkstange und wenigstens zwei Lenkseilen auf, welche ausgebildet ist, eine Lenkbewegung eines Benutzers auf ein Vorderrad zu übertragen, mit wenigstens einer Seilaufnahme, welche von wenigstens einem der Lenkseile, vorzugsweise von beiden Lenkseilen, durchlaufen wird, wobei das Lenkseile, vorzugsweise beide Lenkseile gemeinsam, in einem Schlauch verläuft und gegenüber dem Schlauch in seiner länglichen Erstreckungsrichtung beweglich ist, wobei die Seilaufnahme eine Schlauchhalterung aufweist, welche ausgebildet ist, den Schlauch zu halten und das Lenkseil beweglich zu führen.

Mittels einer derartigen Lenkeinrichtung kann eine Übertragung der Lenkbewegung von dem Lenkbügel bzw. von der Lenkstange über die Lenkseile auf das Vorderrad erfolgen. Hierzu können wenigstens zwei Lenkseile verwendet werden, welche jeweils eine Drehbewegung des Lenkbügels in der einen Richtung entsprechend auf das Vorderrad übertragen können. Das entsprechende andere Lenkseil kann die Bewegung in der Gegenrichtung übertragen.

Hierbei ist zu beachten, dass die Lenkseile vorzugsweise eine konstante Länge aufweisen und zur Übertragung von Zugkräften möglichst unelastisch in ihrer länglichen Erstreckungsrichtung ausgebildet sind. Die Lenkseile sind üblicherweise an einem Ende fest mit der Gabel des Vorderrads und am anderen Ende fest mit der Lenkstange verbunden sowie gespannt, um Zugkräfte vom Lenkbügel über die Lenkstange auf die Gabel und damit auch das Vorderrad übertragen zu können. Dies führt jedoch bei einem längenveränderlichen Fahrrad wie z.B. bei einem Lastenrad dazu, dass bei einer Verkürzung der Länge in der Längsrichtung die Spannung der Lenkseile verloren gehen und damit die Lenkwirkung nicht mehr gegeben sein kann.

Um dies zu vermeiden und damit die Lenkbarkeit des Vorderrads über den Lenkbügel wie zuvor beschrieben bei unterschiedlichen Längen des Lastenrads, insbesondere bei einer stufenlosen Längenänderung, zu gewährleisten, kann die zuvor beschriebene Lenkeinrichtung verwendet werden. Dabei verläuft wenigstens ein Lenkseil innerhalb eines Schlauchs, wie bei einem Kabel mit Kern und Ummantelung. Das Lenkseil ist gegenüber dem Schlauch in seiner länglichen Erstreckungsrichtung beweglich. Dabei wird der Schlauch feststehend gehalten und das Lenkseil wird beweglich geführt, so dass das Lenkseil seine Bewegung in seiner länglichen Erstreckungsrichtung nicht gegenüber dem Lastenrad lose und ungeführt sondern relativ zu dem Schlauch geführt ausführen kann. Da der Schlauch ebenfalls eine feste Länge aufweist, welche durch die Längenänderung des Lastenrads nicht beeinflusst wird, kann das Lenkseil seine Funktion in jeder Länge des Lastenrads ausführen. Hierdurch kann eine Übertragung der Lenkbewegung auch bei veränderlicher Länge des Lastenrades sowie bei anderen längenveränderlichen Fahrrädern ermöglicht werden, so dass dieser Aspekt der vorliegenden Erfindung auch unabhängig von dem erfindungsgemäßen Lastenrad bei anderen längenveränderlichen Fahrrädern angewendet werden kann.

Gemäß eines weiteren Aspekts der vorliegenden Erfindung weist die Seilaufnahme ein Gehäuse auf, welches ausgebildet ist, den Schlauch schlaufenförmig, vorzugsweise um ein Stützelement herum, in seinem Inneren zu führen.

Innerhalb des Gehäuses der Seilaufnahme kann somit der Schlauch samt Lenkseil aufgenommen werden, so dass in diesem Bereich eine schlaufenartige radiale Vergrößerung und Verkleinerung des Schlauches samt Lenkseil stattfinden kann, wenn das Lastenrad in der Länge verändert wird. Hierdurch kann verhindert werden, dass sich der Schlauch samt Lenkseil störend verhalten kann, insbesondere in einem kurzen Zustand des Lastenrads, wenn sich der Schlauch z.B. in der Querrichtung ausbreitet. Dies könnte den Benutzer optisch stören, wenn z.B. der Schlauch seitlich unter dem Aufnahmeelement hervorschaut. Dies könnte auch die Sicherheit beim Fahren beeinträchtigen, da sich der Schlauch mit einer Schlaufe an anderen Objekten verhaken und diese mitreißen bzw. das Lastenrad umreißen könnte. Dies kann dadurch verhindert werden, indem der Schlauch in dem Bereich der Seilaufnahme innerhalb der Seilaufnahme, wo die radiale Ausdehnung des Schlauchs samt Lenkseil auftreten kann, aufgenommen, geführt und gegenüber der Umgebung abgegrenzt wird.

Die zuvor beschriebenen erfindungsgemäßen Aspekte einer Lenkeinrichtung mit Seilaufnahme können dabei zwar ihre Eigenschaften und Vorteile bei einem erfindungsgemäßen Lastenrad wie zuvor beschrieben zur Anwendung bringen. Jedoch kann die erfindungsgemäße Lenkeinrichtung mit Seilaufnahme auch bei anderen längenveränderlichen Lastenräder sonstigen längenveränderlichen Fahrrädern angewendet werden, so dass die erfindungsgemäße Lenkeinrichtung mit Seilaufnahme auch als separate Erfindung gesehen werden kann.

Mehrere Ausführungsbeispiele und weitere Vorteile der Erfindung werden nachstehend im Zusammenhang mit den folgenden Figuren erläutert. Darin zeigt:
- Fig. 1: eine seitliche schematische Darstellung eines erfindungsgemäßen Lastenrads gemäß eines ersten Ausführungsbeispiels in einer maximalen Länge;
- Fig. 2: eine perspektivische schematische Darstellung des Lastenrads der Fig. 1 mit einer aufgenommenen Last;
- Fig. 3: eine seitliche schematische Darstellung des Lastenrads der Fig. 1 in einer geringeren Länge;
- Fig. 4: eine seitliche schematische Darstellung eines erfindungsgemäßen Lastenrads gemäß eines zweiten Ausführungsbeispiels in einer maximalen Länge;
- Fig. 5: eine seitliche schematische Darstellung des Lastenrads der Fig. 4 in einer minimalen Länge;
- Fig. 6: eine perspektivische schematische Darstellung des Lastenrads der Fig. 5;
- Fig. 7: eine perspektivische schematische Darstellung eines erfindungsgemäßen Lastenrads gemäß eines dritten Ausführungsbeispiels in einer maximalen Länge sowie in einer maximalen Breite;
- Fig. 8: eine seitliche schematische Darstellung eines erfindungsgemäßen Lastenrads gemäß eines vierten Ausführungsbeispiels in einer minimalen Länge mit geschlossenem Deckelelement;
- Fig. 9: eine perspektivische schematische Darstellung des Lastenrads der Fig. 8;
- Fig. 10: eine perspektivische schematische Darstellung des Lastenrads der Fig. 9 mit geöffnetem Deckelelement;
- Fig. 11: eine perspektivische schematische Darstellung des Lastenrads der Fig. 8 in einer maximalen Länge;
- Fig. 12: eine perspektivische schematische Darstellung des Lastenrads der Fig. 11 mit halb geöffnetem Deckelelement;
- Fig. 13: eine perspektivische schematische Darstellung des Lastenrads der Fig. 11 mit vollständig geöffnetem Deckelelement;
- Fig. 14: eine perspektivische schematische Darstellung eines erfindungsgemäßen Lastenrads gemäß eines fünften Ausführungsbeispiels in einer maximalen Länge sowie in einer größeren Breite mit geschlossenem Deckelelement;
- Fig. 15: eine perspektivische schematische Darstellung eines erfindungsgemäßen Rahmens gemäß der Lastenräder gemäß des dritten bis fünften Ausführungsbeispiels;
- Fig. 16: eine schematische Detailansicht der Fig. 15 im Querschnitt;
- Fig. 17: eine perspektivische schematische Darstellung einer erfindungsgemäßen Seilaufnahme von schräg oben;
- Fig. 18: eine schematische Detailansicht der Fig. 17 von schräg oben; und
- Fig. 19: eine schematische Detailansicht der Fig. 17 von der Seite.

Die o.g. Figuren werden in kartesischen Koordinaten betrachtet. Es erstreckt sich eine Längsrichtung X, welche auch als Tiefe X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

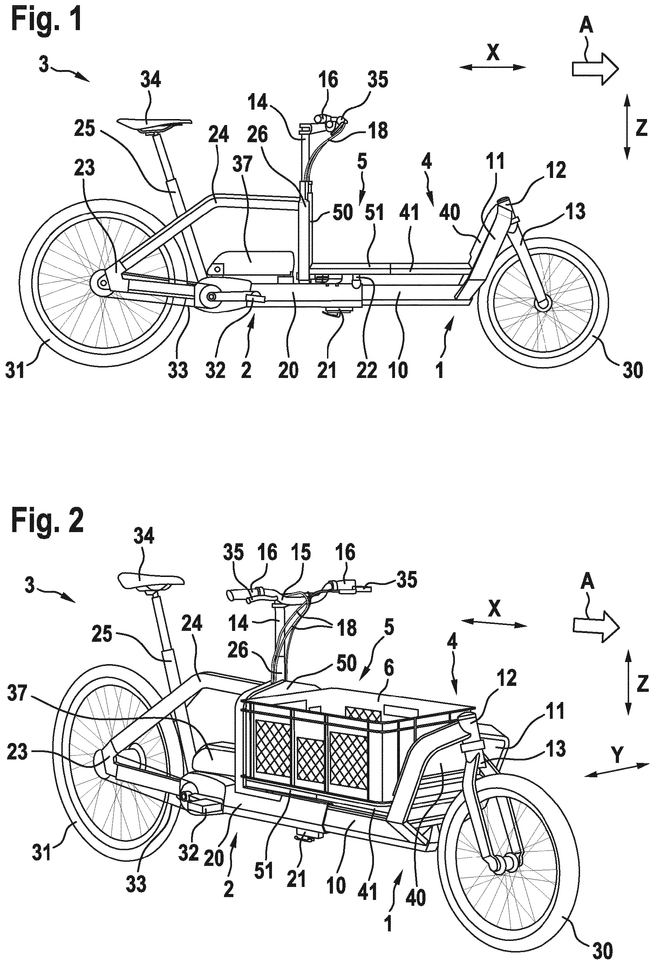

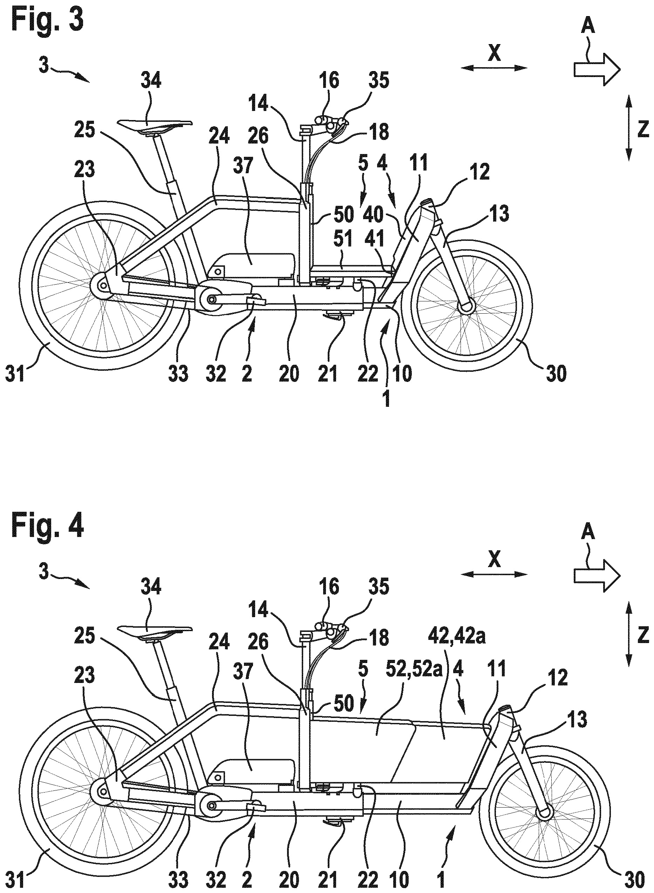

Fig. 1 zeigt eine seitliche schematische Darstellung eines erfindungsgemäßen Lastenrades 3 gemäß einem ersten Ausführungsbeispiel in einer maximalen Länge. Fig. 2 zeigt eine perspektivische schematische Darstellung des Lastenrades 3 der Fig. 1 mit einer aufgenommenen Last 6. Fig. 3 zeigt eine seitliche schematische Darstellung des Lastenrades 3 der Fig. 1 in einer minimalen Länge.

Das erfindungsgemäße Lastenrad 3 kann auch als Lastenfahrrad 3, als Transportrad 3 oder als Transportfahrrad 3 bezeichnet werden. Das Lastenrad 3 besteht im Wesentlichen aus einem Rahmen 1, 2, welcher seinerseits aus einem vorderen Rahmenteil 1 und aus einem hinteren Rahmenteil 2 besteht. An den beiden Rahmenteilen 1, 2 sind verschiedene Komponenten vorgesehen, zu denen auch ein Aufnahmeelement 4, 5 gehört. Das Aufnahmeelement 4, 5 besteht seinerseits im Wesentlichen aus einem vorderen Aufnahmeteil 4 und aus einem hinteren Aufnahmeteil 5. Das Aufnahmeelement 4, 5 dient der Aufnahme von Lasten 6 wie z.B. Waren aber auch Kindern oder Haustieren, je nach Ausbildung des Aufnahmeelements 4, 5, wie im Folgenden näher erläutert werden wird.

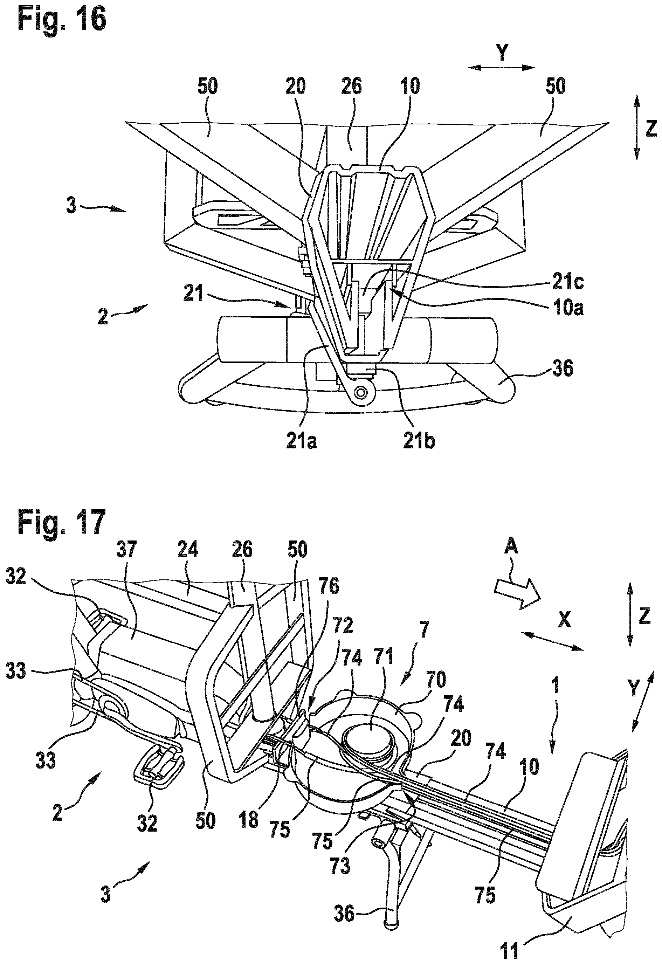

Das vordere Rahmenteil 1 weist eine vordere Teleskopstrebe 10 auf, welche einen trapezförmigen, in der Höhe Z nach oben sowie nach unten hin zulaufenden Querschnitt aufweist, siehe z.B. Fig. 16. Die vordere Teleskopstrebe 10 erstreckt sich im Wesentlichen in der Längsrichtung X des Lastenrades 3. In einer Bewegungsrichtung A des Lastenrades 3, welche in die Längsrichtung X des Lastenrads 3 nach Vorne zeigt, geht die vordere Teleskopstrebe 10 an ihrem vorderen Ende in ein Übergangselement 11 über, welches sich in der Querrichtung Y sowie in der Höhe Z verbreiternd erstreckt. Das Übergangselement 11 geht in eine Gabelaufnahme 12 über, welche drehbar eine Gabel 13 aufnimmt. Von der Gabel 13 wird ein Vorderrad 30 des Lastenrades 3 drehbar gehalten.

Dem vorderen Rahmenteil 1 werden auch weitere Elemente zugeordnet, da sie funktionell mit dem vorderen Rahmenteil 1 zusammenwirken. Hierzu gehört eine Lenkstange 14, welche in der Höhe Z vertikal ausgerichtet ist und von einem Führungselement 26 des hinteren Rahmenteils 2 drehbar aufgenommen wird. In der Höhe Z nach oben schließt die Lenkstange 14 mit einem daran montierten Lenkbügel 15 ab, welcher sich in der Längsrichtung X geringfügig in der Bewegungsrichtung A des Lastenrades 3 und im Wesentlichen in der Querrichtung Y erstreckt. An den beiden seitlichen Enden des Lenkbügels 15 ist jeweils ein Handgriff 16 für die Hände eines Benutzers angeordnet, siehe z.B. Fig. 2.

Das hintere Rahmenteil 2 weist eine hintere Teleskopstrebe 20 auf, welche korrespondierend zu der vorderen Teleskopstrebe 10 ausgebildet ist und die vordere Teleskopstrebe 10 in ihrem Inneren aufnimmt, siehe z.B. Fig. 16. Daher kann die vordere Teleskopstrebe 10 als auch innere Teleskopstrebe 10 und die hintere Teleskopstrebe 20 auch als äußere Teleskopstrebe 20 bezeichnet werden. Die beiden Teleskopstreben 10, 20 sind in der Längsrichtung X zueinander verschiebbar ausgebildet. Um die beiden Teleskopstreben 10, 20 in einer bestimmten Position zueinander zu fixieren, weist das hintere Rahmenteil 2 ein Fixierungselement 21 für die vordere Teleskopstrebe 10 auf. Das Fixierungselement 21 ist in der Höhe Z unterhalb der hinteren Teleskopstrebe 20 im Bereich des offenen Endes der hinteren Teleskopstrebe 20 angeordnet. In dem Bereich des Fixierungselements 21 ist in der Höhe Z oberhalb der hinteren Teleskopstrebe 20 ein Abstützelement 22 vorgesehen, welches das Aufnahmeelement 4, 5 in diesem Bereich von unten abstützt, um statische Lasten von dort aufzunehmen.

In seiner länglichen Erstreckung in der Längsrichtung X entgegen der Bewegungsrichtung A endet das hintere Rahmenteil 2 an einer Hinterradaufnahme 23 zur Aufnahme eines Hinterrades 31 des Lastenrades 3. Das hintere Rahmenteil 2 erstreckt sich von der Hinterradaufnahme 23 sowohl in der Höhe Z als auch in der Längsrichtung X in der Bewegungsrichtung A zunächst diagonal und geht anschließend in einen horizontalen Bereich in der Längsrichtung X über, welcher mit dem zuvor bereits erwähnten Führungselement 26 abschließt. Dieser Abschnitt des hinteren Rahmenteils 2 kann als Verbindungselement 24 bezeichnet werden. In dem diagonal verlaufenden Abschnitt des Verbindungselements 24 ist eine teleskopierbare Sattelaufnahme 25 für einen Sattel 34 vorgesehen.

An dem hinteren Rahmenteil 2 sind im Bereich der hinteren Teleskopstrebe 20 in der Querrichtung Y beidseitig zwei Pedale 32 vorgesehen, so dass diese von einem Benutzer mit den Füßen erreicht und getreten werden können, wenn der Benutzer auf dem Sattel 34 des Lastenrades 3 sitzt. Die Pedale 32 können ihre Kraft mittels einer Kette 33 auf das Hinterrad 31 übertragen.

An den beiden Handgriffen 16 des Lenkbügels 15 sind zwei Bremsgriffe 35 vorgesehen, welche jeweils eine Bremse betätigen können. Eine Bremse wirkt dabei auf das Vorderrad 30, die andere Bremse auf das Hinterrad 31.

Zur Übertragung der Lenkbewegung, welche ein Benutzer über den Lenkbügel 15 auf die Lenkstange 14 ausüben kann, sind an dem unteren Ende der Lenkstange 15 zwei Lenkseile 17 vorgesehen, welche über eine Lenkseilaufnahme 7, welche später mit Bezug auf die Fig. 17 bis 19 näher beschrieben werden wird, auf das Vorderrad 30 wirken können. Dies gilt ebenso für die Übertragung der Bremskräfte von den Bremsgriffen 35 auf das Vorderrad 30 über entsprechende Bremsseile 18. Alternativ können auch hydraulische Bremsen verwendet werden, so dass anstelle der Bremsseile 18 Bremsschläuche verwendet werden würden.

Des Weiteren weist das Lastenrad 3 einen Elektroantrieb 37 auf, welcher in der Höhe Z oberhalb des hinteren Rahmenteils 2 im Bereich der hinteren Teleskopstrebe 20 angeordnet ist und über die Kette 33 kraftunterstützend auf das Hinterrad 31 wirken kann. Hierdurch kann es zu einer Kraftunterstützung des Tretens für den Benutzer kommen, um diesen zu entlasten bzw. die Geschwindigkeit des Lastenrades 3 zu erhöhen. Ein derartiger Elektroantrieb 37 ist üblicherweise batterie- bzw. akkumulatorbetrieben.

Das Lastenrad 3 weist, wie bereits erwähnt, ein Aufnahmeelement 4, 5 auf, welches in dem betrachteten ersten Ausführungsbeispiel der Fig. 1 bis 3 als Ladefläche 4, 5 ausgebildet ist. Das vordere Aufnahmeteil 4 weist in diesem Ausführungsbeispiel ein Querelement 40 auf, welches flächig ausgebildet ist und das Übergangselement 11 des vorderen Rahmenteils 1 innenseitig des Aufnahmeelements 4, 5 abdeckt. Von dem Querelement 40 erstreckt sich ein Bodenelement 41 in der Horizontalen in der Längsrichtung X entgegen der Bewegungsrichtung A zum hinteren Rahmenteil 2 hin. Das Bodenelement 41 ist in der Querrichtung Y ebenso breit wie das Übergangselement 11 des vorderen Rahmenteils 1 ausgebildet. Korrespondierend weist das hintere Aufnahmeelement 5 ein Querelement 50 auf, welches in seiner Breite in der Querrichtung Y dem Querelement 40 des vorderen Aufnahmeelementteils 4 entspricht. Auch entspricht das Querelement 50 des hinteren Aufnahmeelementteils 50 in der Höhe Z etwa der Höhe des Querelements 40 des vorderen Aufnahmeelementteils 4.

Das Querelement 50 des hinteren Aufnahmeelementteils 5 erstreckt sich dabei von der Oberkante der hinteren Teleskopstrebe 20 des hinteren Rahmenteils 2 bis etwa zur Höhe des Verbindungselements 24 des hinteren Rahmenteils 2. Hierdurch ragt das Führungselement 26 in der Höhe Z über das Querelement 50 des hinteren Aufnahmeelementteils 5 hinaus. Das Führungselement 26 des hinteren Rahmenteils 20 wird dabei in der Querrichtung Y beidseitig von dem Querelement 50 des hinteren Aufnahmeelementteils 5 umfasst, so dass diese beiden Elemente 26, 50 miteinander verbunden werden können, was die Länge des Lastenrades 3 in der Längsrichtung X reduzieren kann.

Von dem Querelement 50 des hinteren Aufnahmeelementteils 5 erstreckt sich ein Bodenelement 51 in der Längsrichtung X horizontal in der Bewegungsrichtung A zum vorderen Aufnahmeelementteil 4 hin. Beide Bodenelemente 41, 51 entsprechen in ihrer Breite in der Querrichtung Y der jeweiligen Erstreckung des Querelements 40, 50. Hierdurch kann eine etwa U-förmige Ladefläche 4, 5 ausgebildet werden.

Das vordere Aufnahmeelementteil 4 ist dabei mit dem vorderen Rahmenteil 1 feststehend verbunden, jedoch unverbunden mit dem hinteren Rahmenteil 2. Korrespondierend ist das hintere Aufnahmeelementteil 5 mit dem hinteren Rahmenteil 2 verbunden und mit dem vorderen Rahmenteil 1 unverbunden. Die beiden Bodenelemente 41, 51 sind in der Höhe Z dabei derart gegeneinander ausgerichtet, dass sie in unterschiedlichen Höhen angeordnet sind und in der Längsrichtung X sich geringfügig überlappen.

Wird nun das Fixierungselement 21 des hinteren Rahmenteils 2 vom Benutzer gelöst, so dass die vordere Teleskopstrebe 10 des vorderen Rahmenteils 1 gegenüber der hinteren Teleskopstrebe 20 des hinteren Rahmenteils 2 in der Längsrichtung X bewegt werden kann, oder umgekehrt, so kann hierdurch nicht nur das Lastenrad 3 in seiner länglichen Erstreckung in der Längsrichtung X verändert werden, sondern diese Längenveränderung wirkt sich auch auf die Länge der Ladefläche 4, 5 in der Längsrichtung X aus. Dabei ist eine stufenlose Fixierung der beiden Teleskopstreben 10, 20 gegenüber einander möglich, so dass auch die Ladefläche 4, 5 stufenlos in ihrer länglichen Erstreckung in der Längsrichtung X verändert werden kann. Dabei bewegen sich die beiden Bodenelemente 41, 51 in der Längsrichtung X gegenüber einander, so dass in jeder Länge des Lastenrades 3 eine durchgängige und stufenlos verstellbare Ladefläche 4, 5 gebildet werden kann.

Das Bodenelement 51 des hinteren Aufnahmeelements 5 ist in dem betrachteten Fall unterhalb des Bodenelements 41 des vorderen Aufnahmeelements 4 angeordnet, so dass das Bodenelement 51 des hinteren Aufnahmeelementteils 5 in der Höhe Z von unten durch das Abstützelement 22 gestützt werden kann. Dies kann ein Durchbiegen des Bodenelements 51 des hinteren Aufnahmeelementteils 5 verhindern, da das Gewicht einer Last 6, welches auf das Bodenelement 51 des hinteren Aufnahmeelementteils 50 wirkt, durch das Abstützelement 22 des hinteren Rahmenteils 2 aufgenommen werden kann.

Das Bodenelement 41 des vorderen Aufnahmeelementteils 4 kann dabei in der Querrichtung Y seitlich ausgebildet sein, die korrespondierenden Kanten des Bodenelements 51 des hinteren Aufnahmeelementteils 5 seitlich zu umgreifen. Hierdurch kann eine schienenartige Führung der beiden Bodenelemente 41, 51 in der Längsrichtung X gegenüber einander mit einfachen Mitteln erreicht werden, so dass ein Verkanten oder Verbiegen eines Bodenelements 41 gegenüber dem Bodenelement 51 des hinteren Aufnahmeelementteils 5 verhindert werden kann.

Die Längenänderung des Lastenfahrrades 3 und damit auch der Ladefläche 4, 5 des betrachteten ersten Ausführungsbeispiels der Fig. 1 bis 3 in der Längsrichtung X wird dadurch begrenzt, wie weit die vordere Teleskopstrebe 10 des vorderen Rahmenteils 1 in die hintere Teleskopstrebe 20 des hinteren Rahmenteils 2 eingeschoben bzw. aus dieser in der Längsrichtung X herausgezogen werden kann. Die beiden Bodenelemente 41, 51 sind entsprechend auszulegen, dass über die gesamte veränderbare Länge des Lastenrades 3 eine durchgehende Ladefläche 4, 5 in der Längsrichtung X gewährleistet werden kann. Dabei wird die minimale Länge des Lastenrades 3 auch dadurch begrenzt, dass das Bodenelement 41 des vorderen Aufnahmeelementteils 4 im vollständig eingeschobenen Zustand der vorderen Teleskopstrebe 10 des vorderen Rahmenteils 1 in die hintere Teleskopstrebe 20 des hinteren Rahmenteils 2 gegen das Querelement 50 des hinteren Aufnahmeelementteils 5 anschlägt. In der entgegengesetzten Richtung wird die maximale Länge des Lastenrades 3 dadurch begrenzt, dass noch eine Überlappung der beiden Bodenelemente 41 erreicht wird, um die durchgehende Ladefläche 4, 5 zu erreichen. Ein Herausziehen der vorderen Teleskopstrebe 10 des vorderen Rahmenteils 1 aus der hinteren Teleskopstrebe 20 des hinteren Rahmenteils 2 kann durch eine Anschlag oder dergleichen verhindert werden (nicht dargestellt).

Auf diese Art und Weise kann, wie zuvor beschrieben, etwa eine Halbierung der Ladefläche 4, 5 in der Länge in der Längsrichtung X erreicht werden. Hierdurch kann beispielsweise eine Ladefläche 4, 5 zur Verfügung gestellt werden, welche in der Längsrichtung X zwischen einer minimalen Länge von 300 mm bis zu einer maximalen Länge von 600 mm veränderbar ist. In diesem Fall kann das erfindungsgemäße Lastenrad 3 insbesondere dazu geeignet sein, je nach Längeneinstellung eine genormte Eurokiste mit entsprechenden Maßen in deren länglicher Erstreckung auf der Ladefläche 4, 5 aufzunehmen, siehe Fig. 2. Es ist jedoch auch möglich, die Ladefläche 4, 5 in der Längsrichtung X zwischen einer minimalen Länge von 400 mm bis zu einer maximalen Länge von 800 mm veränderbar zu gestalten, was die nutzbare Ladefläche 4, 5 in der Längsrichtung X vergrößern und dennoch die Aufnahme von genormten Eurokisten mit entsprechenden Maßen in unterschiedlichen Längeneinstellungen der Ladefläche 4, 5 ermöglichen kann.

Gleichzeitig kann das erfindungsgemäße Lastenrad 3 in seiner Gesamtheit derartig konstruiert sein, dass in dem Zustand einer minimalen Länge in der Längsrichtung X ein Radstand von ca. 135 cm erreicht werden kann. Dies kann es ermöglichen, das erfindungsgemäße Lastenrad 3 in seiner minimalen Länge auf einem üblichen Heckträger eines Pkw zu transportieren. Auch kann das erfindungsgemäße Lastenrad 3 in diesem Zustand vom Benutzer mit einem vergleichbaren Verhalten wie bekannte Fahrräder genutzt werden, was den Fahrkomfort für den Benutzer erhöhen kann. Dies kann insbesondere zu einem vergleichbaren agilen und dynamischen Fahren ähnlich wie bei einem Standardfahrrad führen, so dass die Verwendung eines Lastenrades 3 für den Benutzer bei der Benutzung gar nicht merklich spürbar wird. Auch kann es in diesem kurzen Zustand Möglichkeiten vergleichbar einem normalen Fahrrad geben, das erfindungsgemäße Lastenrad 3 abzustellen.

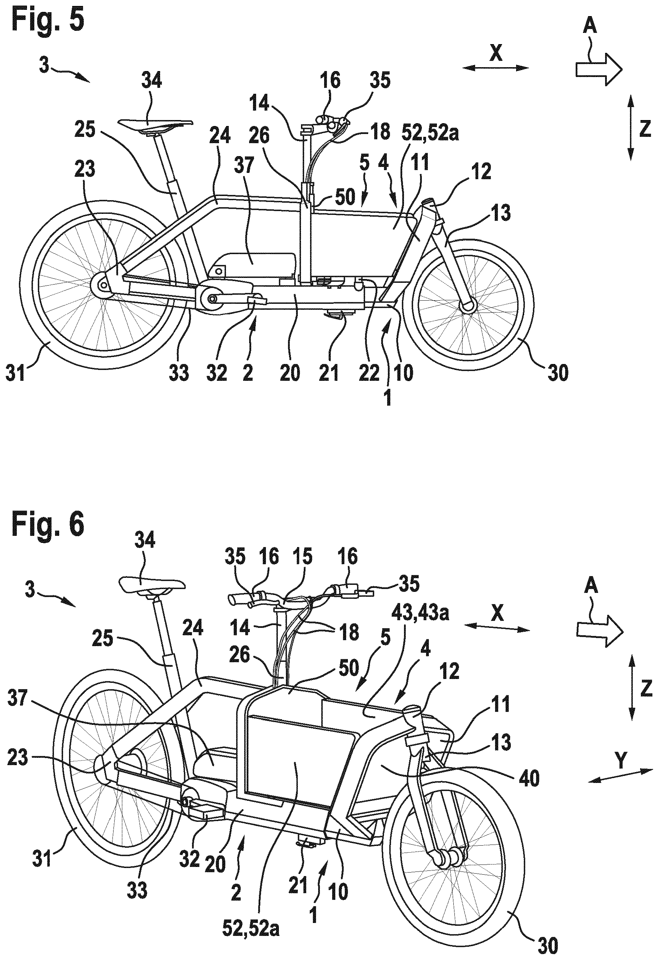

Fig. 4 zeigt eine seitliche schematische Darstellung eines erfindungsgemäßen Lastenrades 3 gemäß einem zweiten Ausführungsbeispiel in einer maximalen Länge. Fig. 5 zeigt eine seitliche schematische Darstellung des Lastenrades 3 der Fig. 4 in einer minimalen Länge. Fig. 6 zeigt eine perspektivische schematische Darstellung des Lastenrades 3 der Fig. 5.

Das erfindungsgemäße Lastenrad 3 des zweiten Ausführungsbeispiels der Fig. 4 bis 6 entspricht im Wesentlichen dem Lastenrad 3 gemäß des ersten Ausführungsbeispiels der Fig. 1 bis 3 mit dem Unterschied, dass in diesem Fall die Ladefläche 4, 5 in Form einer Ladewanne 4, 5 ausgebildet ist. Hierzu ist das Bodenelement 41 des vorderen Aufnahmeelementteils 4 jeweils seitlich in der Höhe Z derart hochgebogen verlängert ausgebildet, dass in der Querrichtung Y ein erstes, rechtes Seitenelement 42 und gegenüberliegend ein zweites linkes Seitenelement 43 ausgebildet werden, welche sich jeweils in der Höhe Z gleich weit erstrecken und flächig parallel zueinander verlaufen. Ebenso weist das Bodenelement 51 des hinteren Aufnahmeelementteils 5 ein erstes, rechtes Seitenelement 52 und ein zweites, linkes Seitenelement 53 auf. Im Querschnitt sind die beiden Aufnahmeelementteile 4, 5 somit U-förmig in der Höhe Z nach oben hin offen ausgebildet. Wie zuvor hinsichtlich der Bodenelemente 41, 51 beschrieben, verlaufen auch die Bodenelemente 41, 51 samt Seitenelementen 42, 43, 52, 53 parallel zueinander und einander überlappend, so dass in diesem Fall eine längenveränderliche Ladewanne 4, 5 ausgebildet wird.

Auch in diesem Fall verläuft das vordere Aufnahmeelementteil 4 oberhalb bzw. in der Querrichtung Y innerhalb des hinteren Aufnahmeelementteils 5. Die oberen Kanten der innen liegend angeordneten Seitenelemente 42, 43 des vorderen Aufnahmeelementteils 4 können auch in diesem Fall die korrespondierenden Kanten der Seitenelemente 52, 53 des hinteren Aufnahmeelementteils 5 umgreifen, um, wie zuvor beschrieben, eine sichere schienenartige Führung zu bilden und ein definiertes Verschieben der beiden Aufnahmeelementteile 4, 5 in der Längsrichtung X gegeneinander zu ermöglichen. Eine derartige Ladewanne 4, 5 kann insbesondere zur Aufnahme von mehreren kleineren Lasten 6, wie zum Beispiel Paketen, Beuteln und dergleichen, aber auch von Kindern und Hautieren vorgesehen sein.

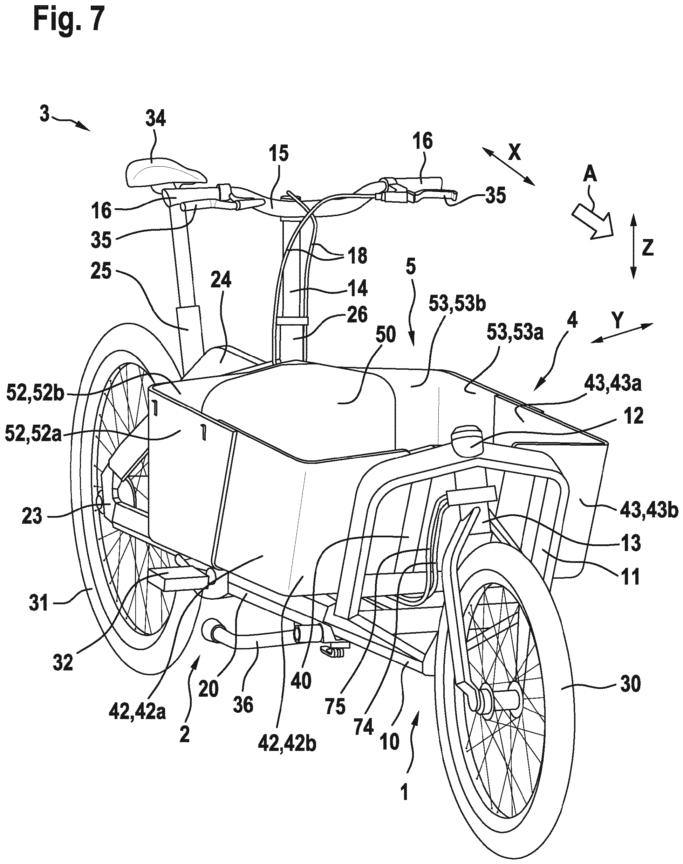

Fig. 7 zeigt eine perspektivische schematische Darstellung eines erfindungsgemäßen Lastenrades 3 gemäß einem dritten Ausführungsbeispiel in einer maximalen Länge sowie in einer maximalen Breite. Das Lastenrad 3 gemäß dem dritten Ausführungsbeispiel der Fig. 7 entspricht dabei im Wesentlichen dem erfindungsgemäßen Lastenrad 3 des zweiten Ausführungsbeispiels der Fig. 4 bis 6. In diesem Fall sind jedoch die jeweiligen Seitenelemente 42, 43, 52, 53 sowohl des vorderen Aufnahmeelementteils 4 als auch des hinteren Aufnahmeelementteils 5 in der Querrichtung Y gegenüber dem jeweiligen Querelement 40, 50 beweglich ausgebildet. Dies kann beispielsweise über eine Schiebemechanik in Form eines in der Querrichtung Y ausgerichteten Langlochs in Kombination mit einem Bolzen oder dergleichen (nicht dargestellt) eines Querelements 40, 50 erfolgen.

Die Seitenelemente 42, 43, 52, 53 weisen hierzu jeweils einen Längsbereich 42a, 43a, 52a, 53a auf, welcher jeweils gegenüber dem zuvor beschriebenen Verschiebemechanismus mit dem entsprechenden Querelement 40, 50 in der Querrichtung Y verschiebbar verbunden ist. Aus der Sicht der Ladewanne 4, 5 sind dabei die Seitenelemente 42, 43, 52, 53 mit einem jeweiligen Querbereich 42b, 43b, 52b, 53b hinter dem jeweiligen Querelement 40, 50 angeordnet. Hierdurch können die Seitenelemente 42, 43, 52, 53 in der Querrichtung Y gegenüber dem jeweiligen Querelement 40, 50 verschoben und in der entsprechenden Position durch Rastmittel oder dergleichen, wie zum Beispiel Spannmittel, positioniert fixiert werden (nicht dargestellt). Hierdurch kann eine Breitenänderung der Aufnahmeladewanne 4, 5 erreicht werden. Die Längsbereiche 42a, 43a, 52a, 53a der Seitenelemente 42, 43, 52, 53 der Aufnahmeelementteile 4, 5 sind dabei, wie zuvor beschrieben, parallel zueinander sowie einander überlappend angeordnet. Hierdurch kann die zuvor beschriebene Längenveränderlichkeit des zweiten Ausführungsbeispiels auch in Kombination mit einer veränderbaren Breite der Aufnahmewanne 4, 5 beibehalten werden.

Das Lastenfahrrad 3 gemäß dem dritten Ausführungsbeispiel der Fig. 7 weist ferner an der Unterseite der hinteren Teleskopstrebe 20 des hinteren Rahmenteils 2 einen Fahrradständer 36 auf, welcher von einem Benutzer durch Klappen bzw. Schwenken zu einem Untergrund hin betätigt und verwendet werden kann. Hierdurch kann ein sicherer Stand des Lastenrades 3 erreicht werden, ohne dass der Benutzer das Lastenrad 3 zum Beispiel an den Handgriffen 16 des Lenkbügels 15 halten muss. Dies kann es ermöglichen, dass ein Benutzer insbesondere ein Entladen bzw. Beladen des Aufnahmeelements 4, 5 ausführen kann, während das Lastenrad 3 durch den Fahrradständer 36 sicher im Wesentlichen in der Horizontalen gehalten wird. Dieser Fahrradständer 36 könnte auch bei den Lastenrädern 3 des ersten und zweiten Ausführungsbeispiels angewendet werden.

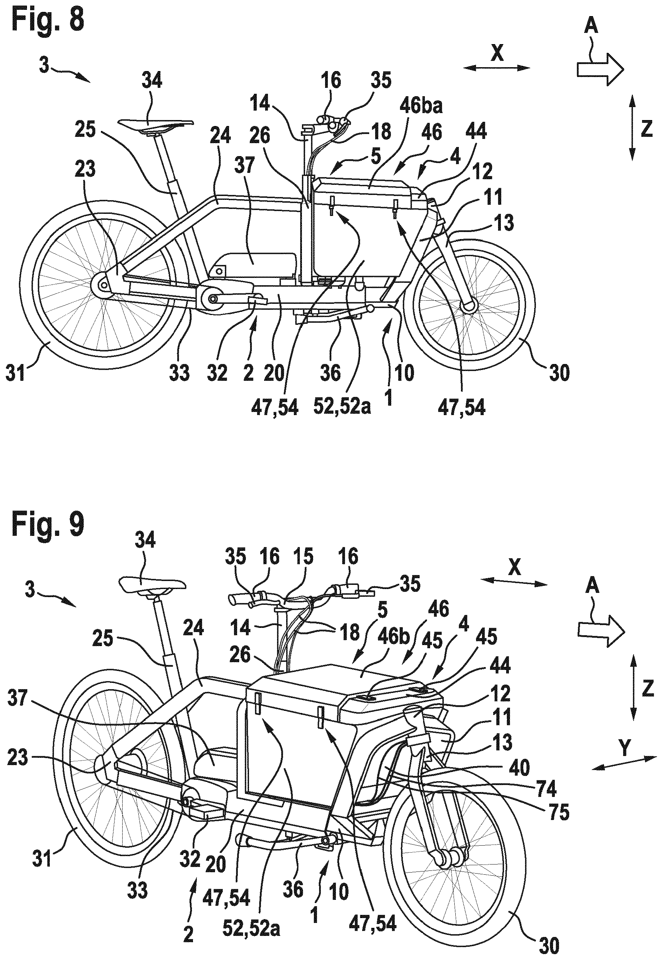

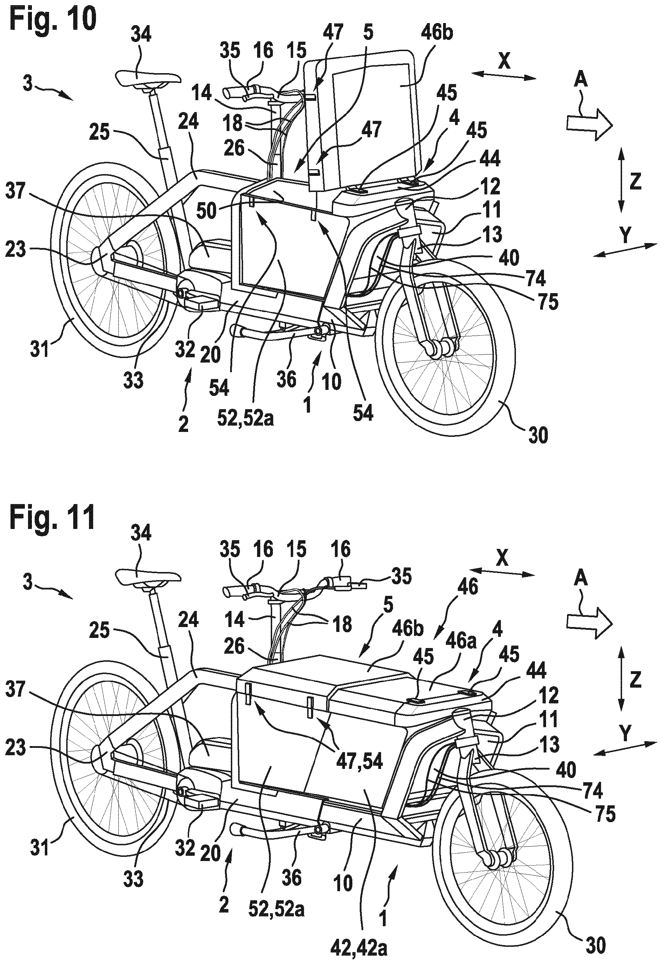

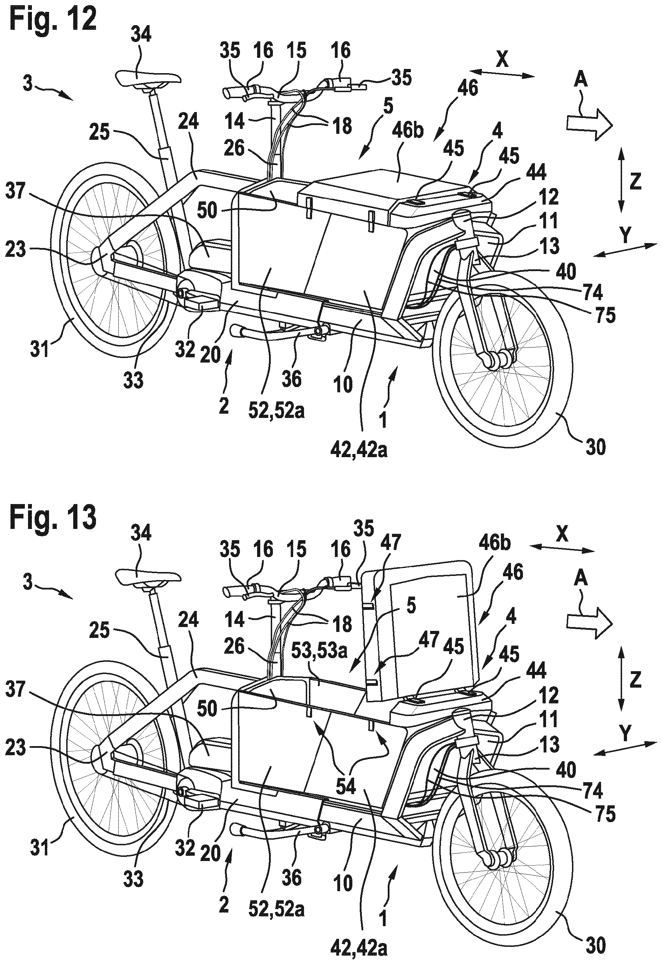

Fig. 8 zeigt eine seitliche schematische Darstellung eines erfindungsgemäßen Lastenrades 3 gemäß einem vierten Ausführungsbeispiel in einer minimalen Länge mit geschlossenem Deckelelement 46. Fig. 9 zeigt eine perspektivische schematische Darstellung des Lastenrades 3 der Fig. 8. Fig. 10 zeigt eine perspektivische schematische Darstellung des Lastenrades 3 der Fig. 9 mit geöffnetem Deckelelement 46. Fig. 11 zeigt eine perspektivische schematische Darstellung des Lastenrades 3 der Fig. 8 in einer maximalen Länge. Fig. 12 zeigt eine perspektivische schematische Darstellung des Lastenrades 3 der Fig. 11 mit halb geöffnetem Deckelelement 46. Fig. 13 zeigt eine perspektivische schematische Darstellung des Lastenrades 3 der Fig. 11 mit vollständig geöffnetem Deckelelement 3.

Das Lastenrad 3 gemäß dem vierten Ausführungsbeispiel der Fig. 8 bis 13 entspricht im Wesentlichen dem Lastenrad 3 gemäß dem zweiten Ausführungsbeispiel gemäß der Fig. 4 bis 6. Ergänzend ist bei dem vierten Ausführungsbeispiel des Lastenrads 3 ein Deckelelement 46 vorgesehen. Das Deckelelement 46 weist ein erstes, vorderes Deckelelementteil 46a und ein zweites, hinteres Deckelelementteil 46b auf. Die beiden Deckelelementteile 46a, 46b sind vergleichbar den zuvor beschriebenen Bodenelementen 41, 51 im Wesentlichen horizontal ausgerichtet und in der Längsrichtung X gegenüber einander beweglich. Dabei ist das zweite, hintere Deckelelementteil 46b in der Höhe Z oberhalb des ersten, vorderen Deckelelementteils 46a angeordnet. Das zweite, hintere Deckelelementteil 46b kann daher auch als oberes Deckelelementteil 46b bezeichnet werden. Entsprechend kann das erste, vordere Deckelelementteil 46a auch als unteres Deckelelementteil 46a bezeichnet werden. Beide Deckelelementteile 46a, 46b erstrecken sich in der Querrichtung Y randseitig in der Höhe Z nach unten zu den oberen Kanten der Seitenelemente 42, 43, 52, 53 hin, so dass ein seitlicher Abschluss des Aufnahmeelements 4, 5 der Querrichtung Y gebildet werden kann. Auch umgreift das zweite, hintere Deckelelementteil 46b das erste, vordere Deckelelementteils 46a auf diese Art und Weise in der Querrichtung Y beidseitig, so dass, wie zuvor beschrieben, eine schienenartige Führung und Beweglichkeit der beiden Deckelelementteile 46a, 46b in der Längsrichtung X gegenüber einander ermöglichen kann.

Um das Deckelelement 46 als Ganzes beweglich mit dem vorderen Aufnahmeelementteil 4 zu verbinden, weist das vordere Aufnahmeelementteil 4 eine Deckelhalterung 44 auf, welche, sich im Wesentlichen in der Querrichtung Y erstreckend, feststehend an der in der Höhe Z oberen Kante des Übergangselements 11 des vorderen Rahmenteils 1 angeordnet ist. An der Deckelhalterung 44 ist das Deckelelement 46 mit seiner in der Längsrichtung X in der Bewegungsrichtung A vorderen Kante mittels zweier Schwenkelemente 45 in Form von Scharnieren 45 angeordnet, so dass das Deckelelement 46 in der Bewegungsrichtung A nach vorne bzw. oben hin geschwenkt bzw. geklappt werden kann.

Das Deckelelement 46 kann somit vom Benutzer dazu verwendet werden, die Ladewanne 4, 5 in der Höhe Z von oben abzudecken. Hierdurch kann das Aufnahmeelement 4, 5 als Ladekiste 4, 5 verwendet werden. Dabei ist das Deckelelement 46 durch die in der Längsrichtung X veränderbare Länge, welche durch die Verschiebbarkeit der beiden Deckelelementteile 46a, 46b in der Längsrichtung X zueinander ermöglicht wird, in der Lage, die Längenänderung des Lastenrades 3 bzw. der Ladekiste 4, 5 stufenlos mit auszuführen.

Wie in den Fig. 8 und 9 gezeigt wird, können die beiden Deckelelementteile 46a, 46b in der Längsrichtung X ineinandergeschoben werden, so dass das Deckelelement 46 auch bei einer vergleichsweise kurzen Länge des Lastenrades 3 dazu verwendet werden kann, das Aufnahmeelement 4, 5 als Ladekiste 4, 5 vollständig abzudecken. In diesem Fall kann das Deckelelement 46 im zusammengeschobenen Zustand der Deckelelementteile 46a, 46b mittels der Scharniere 45 nach vorne bzw. oben geschwenkt werden, um dem Benutzer einen Zugriff auf das Innere der Ladekiste 4, 5 zu ermöglichen.

Gleichzeitig kann das Deckelelement 46 durch ein Auseinanderziehen des zweiten, hinteren, oberen Deckelelementteils 46b gegenüber dem ersten, vorderen, unteren Deckelelementteil 46a in der Längsrichtung X auch auf die entsprechende größere Länge des Lastenrades 3 bzw. der Ladekiste 4, 5 verlängert werden, um auch in diesem Zustand den Innenraum der Ladekiste 4, 5 vollständig abdecken zu können, siehe Fig. 11. In diesem länglichen Zustand der Ladekiste 4, 5 kann das Deckelelement 46 ebenfalls mittels der Scharniere 45 nach vorne bzw. oben geschwenkt werden, um einen Zugriff auf das Innere der Ladekiste 4, 5 zu ermöglichen. Hierzu wird vorzugsweise das zweite, hintere, obere Deckelelementteil 46b über das erste, vordere, untere Deckelelementteil 46a geschoben, siehe Fig. 12. In diesem Zustand kann ein vergleichsweise kurzes Deckelelement 46a, wie zuvor beschrieben, nach vorne bzw. oben geschwenkt werden, siehe Fig. 13, was die Handhabung des Deckelelements 46 für den Benutzer vereinfachen kann. Gleichzeitig kann ein verkürztes Deckelelement 46 im hochgeschwenkten Zustand für den Benutzer weniger störend sein.

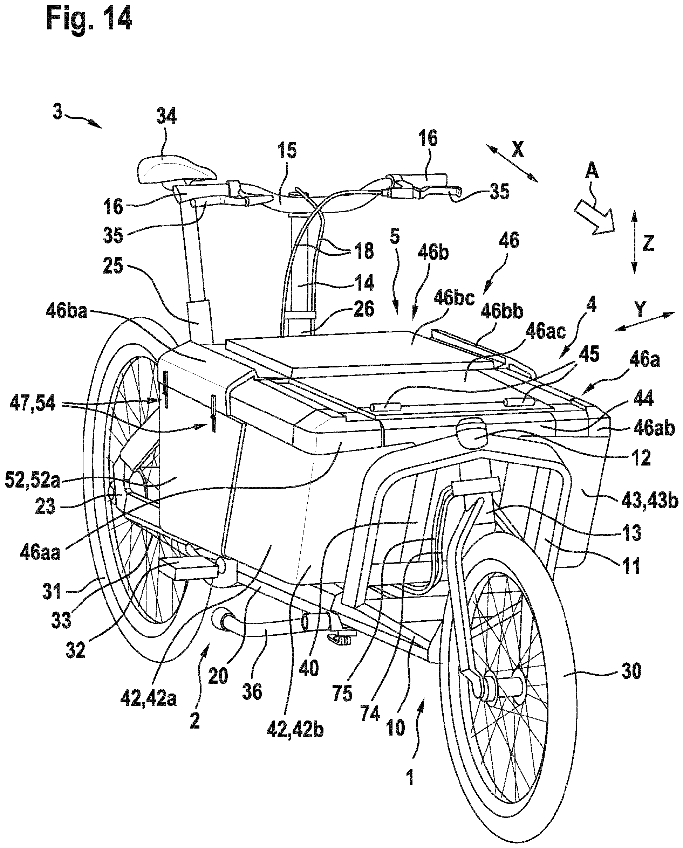

Fig. 14 zeigt eine perspektivische schematische Darstellung eines erfindungsgemäßen Lastenrades 3 gemäß einem fünften Ausführungsbeispiel in einer maximalen Länge sowie in einer größeren Breite mit geschlossenem Deckelelement 46.

In diesem Fall weist das erste, vordere, untere Deckelelementteil 46a ein Mittelelement 46ac auf, welches über die zuvor beschriebenen Scharniere 45 mit der Deckelhalterung 44 verbunden ist. In der Querrichtung Y beidseitig einander gegenüberliegend und durch das Mittelelement 46ac zueinander beabstandet weist das erste, vordere, untere Deckelelementteil 46a ein erstes, rechtes Seitenelement 46aa und ein zweites, linkes Seitenelement 46ab auf. Die Seitenelemente 46aa, 46ab sind in der Querrichtung Y gegenüber dem Mittelelement 46ac vergleichbar beweglich sowie fixierbar, wie bei dem dritten Ausführungsbeispiel des Lastenrades 3 der Fig. 7 hinsichtlich der Querbereiche 42b, 43b der Seitenelemente 42, 43 beschrieben wurde. Ebenso weist das zweite, hintere, obere Deckelelementteil 46b ein Mittelelement 46bc auf, welches vergleichbar in der Querrichtung Y mittig zwischen einem ersten, rechten Seitenelement 46ba und einem zweiten, linken Seitenelement 46bb angeordnet ist. Auf diese Art und Weise kann auch bei der Verwendung eines Deckelelements 46 die hinsichtlich des Ausführungsbeispiels der Fig. 7 des dritten Ausführungsbeispiels beschriebene Veränderlichkeit der Breite auf das Deckelelement 46 übertragen werden.

Hinsichtlich des Deckelelements 46 gemäß dem vierten Ausführungsbeispiel der Fig. 8 bis 13 sowie des vierten Ausführungsbeispiels der Fig. 14 ist zu erwähnen, dass jeweils das zweite, hintere, obere Deckelelementteil 46b in der Querrichtung Y an seinen seitlichen Kanten jeweils zwei Verschlusselemente 47 aufweist, welche mit korrespondierenden Verschlusselementaufnahmen 54 verschließbar sind. Derartige Verschlusselemente 47 bzw. Verschlusselementaufnahmen 54 können dazu ausgebildet sein, zum Beispiel mittels Bügeln, Spannelementen oder dergleichen, einen zumindest gegenüber Bewegungen haltbaren Verschluss des Deckelelements 46 gegenüber der Ladekiste 4, 5 zu erreichen. Die Verschlusselemente 47 und Verschlusselementaufnahmen 54 können darüber hinaus auch dazu ausgebildet sein, zum Beispiel mittels eines Schlosses oder eines Vorhängeschlosses abschließbar zu sein, so dass ein Benutzer sich auch von dem Lastenrad 3 entfernen kann und die in der Ladekiste 4, 5 aufgenommenen Lasten 6 sicher vor unbefugten Zugriffen sind.

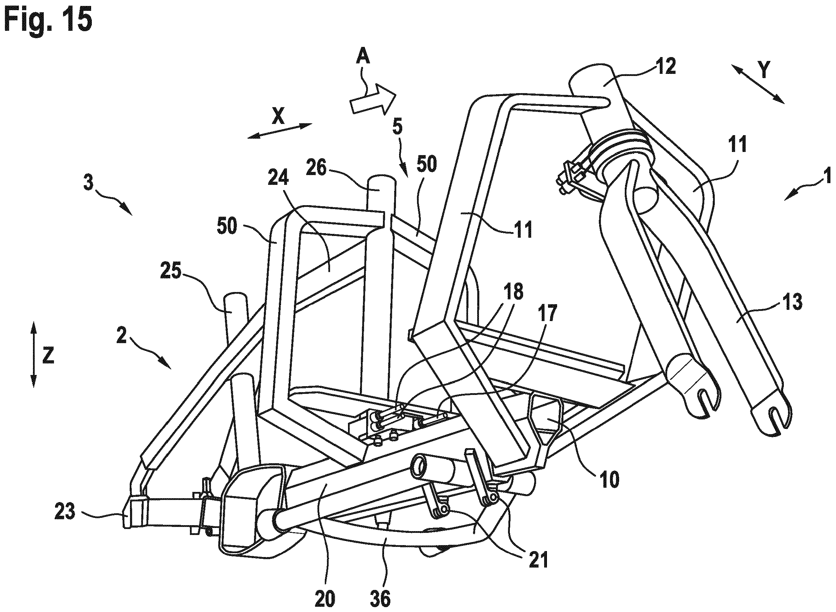

Fig. 15 zeigt eine perspektivische schematische Darstellung eines erfindungsgemäßen Rahmens 1, 2 vergleichbar der Lastenräder 3 gemäß des dritten bis fünften Ausführungsbeispiels. Fig. 16 zeigt eine schematische Detailansicht der Fig. 15 im Querschnitt. Von dem erfindungsgemäßen Rahmen 1, 2 gemäß der Lastenräder 3 gemäß des ersten und zweiten Ausführungsbeispiels unterscheidet sich die Darstellung der Fig. 15 und 16 lediglich durch den Fahrradständer 36. Von dem erfindungsgemäßen Rahmen 1, 2 gemäß der Lastenräder 3 gemäß des ersten bis fünften Ausführungsbeispiels unterscheidet sich die Darstellung der Fig. 15 und 16 insgesamt durch die zwei Fixierungselemente 21.

Die vordere Teleskopstrebe 10, welche als innere Teleskopstrebe 10 in der hinteren Teleskopstrebe 20 als äußere Teleskopstrebe 20 geführt wird, weist in ihrem Inneren eine Führung 10a in Form einer T-förmigen Nut 10a auf, welche sich durchgängig in der Längsrichtung X erstreckt und in der Höhe Z nach unten hin offen ausgebildet ist, siehe z.B. Fig. 16. In der Höhe Z von unten sind außen an der hinteren Teleskopstrebe 20 zwei identische Fixierungselemente 21 angeordnet, welche in der Längsrichtung X zueinander beabstandet sind, siehe z.B. Fig. 15. Jedes Fixierungselement 21 weist einen Handgriff 21a auf, welcher jeweils von einer Aufnahme 21b an der Unterseite der hinteren Teleskopstrebe 20 gehalten wird. Jeder Handgriff 21a ist jeweils mit einem Halterungselement 21c drehbeweglich verbunden, welches sich in der Höhe Z nach oben durch eine entsprechende Durchgangsöffnung der hinteren Teleskopstrebe 20 hindurch in die Nut 10a erstreckt. Das Halterungselement 21c ist jeweils als Nutenstein 21c ausgebildet, welcher in der korrespondierenden T-förmigen Nut 10a geführt wird. Dabei erstreckt sich der Nutenstein 21c zunächst in der Höhe Z geradlinig in die Nut 10a und verbreitert sich in der Querrichtung Y an seinem oberen Ende, so dass der Handgriff 21a, welcher in der Höhe Z lose von der Aufnahme 21b geführt wird, durch die Verbreiterung des Nutensteins 21c entgegen der Schwerkraft gehalten wird.

Der Handgriff 21a weist an seinem Ende, welches mit dem unteren Ende des Nutensteins 21c drehbeweglich verbunden ist, eine Ausbildung als Exzenter auf, so dass der Abstand zwischen der Außenkante des Exzenters des Handgriffs 21a und der Unterseite der Aufnahme 21b von der Stellung des Handgriffs 21a entlang seiner Drehrichtung abhängt. Ist der Handgriff 21a, wie in den Fig. 15 und 16 dargestellt, in der Höhe Z nach oben an die hintere Teleskopstrebe 20 herangeklappt, so ist der Abstand zwischen der Außenkante des Exzenters des Handgriffs 21a und der Unterseite der Aufnahme 21b ausreichend gering, so dass der Exzenter des Handgriffs 21a in der Höhe Z gegen die Unterseite der Aufnahme 21b drückt und hierdurch den Nutenstein 21c in der Höhe Z von oben auf die Flanken der Nut 10a zieht. Hierdurch werden die unteren trapezförmigen Schenkel der vorderen, inneren Teleskopstrebe 10 gegen die Innenseiten der korrespondierenden Schenkel der hinteren, äußeren Teleskopstrebe 20 flächig gedrückt und die vordere, innere Teleskopstrebe 10 gegenüber der hinteren, äußeren Teleskopstrebe 20 arretiert, so dass eine Beweglichkeit in der Längsrichtung X unterbunden werden kann. Hierdurch kann ein kraftschlüssiger Halt zwischen den beiden Teleskopstreben 10, 20 in der Längsrichtung X erreicht werden, so dass die durch Verschieben vorgegebene Positionierung der vorderen, inneren Teleskopstrebe 10 gegenüber der hinteren, äußeren Teleskopstrebe 20 vom Benutzer durch Betätigen des Handgriffs 21 fixiert werden kann. Dies kann über die Verwendung beider Fixierungselemente 21 verstärkt werden.

Wird der Handgriff 21a in der entgegengesetzten Richtung von der hinteren Teleskopstrebe 20 weggeklappt, so wird der Abstand zwischen der Außenkante des Exzenters des Handgriffs 21a und der Unterseite der Aufnahme 21b ausreichend vergrößert, so dass der Nutenstein 21c in der Höhe Z lose auf den Flanken der Nut 10a aufliegt und die vordere, innere Teleskopstrebe 10 gegenüber der hinteren, äußeren Teleskopstrebe 20 in der Längsrichtung X beweglich ist. In diesem gelösten Zustand kann die Länge des Lastenrads 3 verändert werden.

Zwischen den Schenkeln der Teleskopstreben 10, 20 kann dabei ein Hartgummikörper als Schutzelement angeordnet sein (nicht dargestellt), um an dieser Stelle die Außenseiten der beiden Teleskopstreben 10, 10 voreinander z.B. vor Abrieb zu schützen sowie um die Reibkraft zu erhöhen. Der Hartgummikörper ist dabei vorzugsweise z.B. durch Aufkleben an der Innenseite der äußeren Teleskopstrebe 20 feststehend angeordnet.

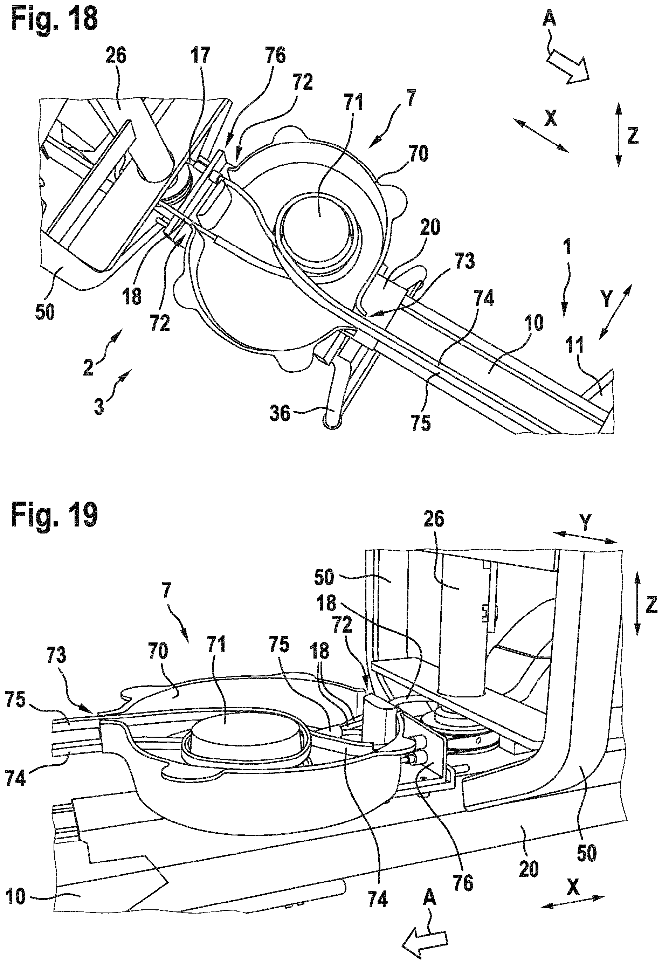

Fig. 17 zeigt eine perspektivische schematische Darstellung einer erfindungsgemäßen Seilaufnahme 7 von schräg oben. Fig. 18 zeigt eine schematische Detailansicht der Fig. 17 von schräg oben. Fig. 19 zeigt eine schematische Detailansicht der Fig. 17 von der Seite.

Eine Lenkeinrichtung 14, 15, 17 des erfindungsgemäßen Lastenrads 3 wird durch den Lenkbügel 15, die Lenkstange 14 und zwei Lenkseile 17 gebildet, welche jeweils eine Drehbewegung des Lenkbügels 15 in der einen Richtung auf das Vorderrad 30 übertragen können. Das entsprechende andere Lenkseil 17 kann die Bewegung in der Gegenrichtung auf das Vorderrad 30 übertragen. Es ist eine Seilaufnahme 7 vorgesehen, welche in der Höhe Z oberhalb der hinteren Teleskopstrebe 20 und unterhalb des Bodenelements 50 (in den Fig. 17 bis 19 nicht dargestellt) des hinteren Aufnahmeelementteils 5 angeordnet ist. Die Seilaufnahme 7 weist eine Gehäuse 70 auf, welches im Wesentlichen kreisringförmig ausgebildet ist und in der Höhe Z von oben durch das Bodenelement 51 des hinteren Aufnahmeelementteils 5 abgedeckt wird. Im Inneren des Gehäuses 70 ist ein Stützelement 71 exzentrisch zur Mitte angeordnet, welches kreisringförmig ausgebildet ist und sich in der Höhe Z über die gesamte Höhe des Gehäuses 70 erstreckt.

Die Seilaufnahme 7 weist dem Führungselement 26 zugewandt zwei Eingangsöffnungen 72 und dem vorderen Rahmenteil 1 zugewandt eine Ausgangsöffnung 73 auf. Durch die rechte Eingangsöffnung 72 werden die Bremseile 18 für die Bremse des Vorderrads 30 von dem Führungselement 26 der Lenkstange 14 kommend in das Innere des Gehäuses 70 geführt, umlaufen dort wenigstens einmalig das Stützelement 71 und treten durch die Ausgangsöffnung 73 zur vorderen Teleskopstrebe 10 hin aus dem Gehäuse 70 wieder aus. Vergleichbaren werden die Lenkseile 17 durch die linke Eingangsöffnung 72 von dem Führungselement 26 der Lenkstange 14 kommend in das Innere des Gehäuses 70 geführt, umlaufen dort ebenfalls wenigstens einmalig das Stützelement 71 und treten durch die Ausgangsöffnung 73 gemeinsam mit den Bremsseilen 18 zur vorderen Teleskopstrebe 10 hin aus dem Gehäuse 70 wieder aus. Mit anderen Worten durchlaufen die Bremseile 18 und die Lenkseile 17 das Gehäuse 70 der Seilaufnahme 7.

Dabei treten die Bremsseile 18 innerhalb des Gehäuses 7 in einen Schlauch 75 ein und werden von diesem bis zur Bremse des Vorderrads 30 geführt. Dies kann eine sichere und definierte gemeinsame Führung der Bremsseile 18 ermöglichen.

Auch werden die Lenkseile 17 innerhalb des Gehäuses 7 in einem Schlauch 74 gemeinsam aufgenommen und von diesem geführt. Der Schlauch 74 der Lenkseile 17 ist dabei an seinem dem Führungselement 26 der Lenkstange 14 zugewandten Ende an einer Schlauchhalterung 76 der Seilaufnahme 7 feststehend befestigt, wohingegen die Lenkseile 17 durch den Schlauch 74 und durch die Schlauchhalterung 76 hindurch in ihrer länglichen Erstreckungsrichtung beweglich sind. Dies kann es ermöglichen, eine Drehbewegung des Lenkbügels 15 über die Lenkstange 14 in eine Zugbewegung des jeweiligen Lenkseils 17 zu übertragen, welche geführt gegenüber dem Mantel des Schlauchs 74 erfolgt, welcher das Lenkseil 17 umgibt. Diese Zugkraft kann am anderen Ende des jeweiligen Lenkseils 17 auf das Vorderrad 30 übertragen werden, um diese in die jeweilige Richtung zu ziehen bzw. zu lenken.

Die Abstützung der Lenkseile 17 durch den Schlauch 74 kann eine stets gleichbleibende Zugkraftübertragung bei jeder Längeeinstellung des Lastenrads 3 ermöglichen, da die Bewegung der Lenkseile 17 relativ zum Schlauch 74 erfolgt und die Lenkseile 17 sowie der Schlauch 74 eine konstante Länge aufweisen, welche unabhängig von der veränderlichen Länge des Lastenrads 3 ist. Dabei kann das Schlauch 74 samt Lenkseile 17 dennoch der Längenänderung des Lastenrads 3 folgen, indem der Schlauch 74 innerhalb des Gehäuses 70 der Seilaufnahme 7 um das Stützelement 71 herum geführt ist und sich spiralförmig ausdehnen und zusammenziehen kann. Wird somit das Lastenrad 3 auf eine maximale Länge ausgezogen, so bildet der Schlauch 74 eine enge Schlaufe um das Stützelement 71 aus, siehe Fig. 17 bis 19. Wird das Lastenrad 3 auf eine minimale Länge zusammengeschoben, so liegt der Schlauch 74 nahezu von innen am Gehäuse 70 der Seilaufnahme 7 an (nicht dargestellt). Dies gilt ebenso für den Schlauch 75 der Bremsseile 18. Auf diese Art und Weise kann eine Übertragung der Lenkbewegung des Benutzers auf das Vorderrad 30 des Lastenrads 3 auch bei dessen erfindungsgemäßer Längenveränderlichkeit und insbesondere stufenlos erfolgen.

Die Lenkeinrichtung 14, 15, 17 wird dabei anhand des erfindungsgemäßen Lastenrads 3 betrachtet und auf dieses angewendet, kann jedoch auch unabhängig von dem betrachteten Lastenrad 3 bei anderen längenveränderlichen Lastenrädern sowie bei längenveränderlichen Fahrrädern allgemein angewendet werden.

### BEZUGSZEICHENLISTE (Teil der Beschreibung)

- A: Bewegungsrichtung
- X: Längsrichtung; Tiefe
- Y: Querrichtung; Breite
- Z: vertikale Richtung; Höhe

- 1: vorderes Rahmenteil eines Rahmens 1, 2 für ein Lastenrad 3
- 10: vordere Teleskopstrebe
- 10a: Führung für Halterungselement 21c; Nut
- 11: Übergangselement
- 12: Gabelaufnahme
- 13: Gabel für Vorderrad 30
- 14: Lenkstange
- 15: Lenkbügel
- 16: Handgriffe
- 17: Lenkseile
- 18: Bremsseile für Vorderrad 30

- 2: hinteres Rahmenteil eines Rahmens 1, 2 für ein Lastenrad 3
- 20: hintere Teleskopstrebe
- 21: Fixierungselement für vordere Teleskopstrebe 10
- 21a: Handgriff mit Exzenterkopf
- 21b: Aufnahme
- 21c: Halterungselement; Nutenstein
- 22: Abstützelement für Aufnahmeelement 4, 5
- 23: Hinterradaufnahme für Hinterrad 31
- 24: Verbindungselement
- 25: teleskopierbare Sattelaufnahme für Sattel 34
- 26: Führungselement der Lenkstange 14

- 3: Lasten(fahr)rad; Transport(fahr)rad
- 30: Vorderrad
- 31: Hinterrad
- 32: Pedale
- 33: Kette
- 34: Sattel
- 35: Bremsgriffe
- 36: Fahrradständer
- 37: Elektroantrieb

- 4: vorderes Aufnahmeelementteil eines Aufnahmeelements 4, 5 / einer Ladefläche 4, 5 / einer Ladewanne 4, 5 / einer Ladekiste 4, 5
- 40: Querelement
- 41: Bodenelement
- 42: erstes/rechtes Seitenelement
- 42a: Längsbereich des ersten/rechten Seitenelements 42
- 42b: Querbereich des ersten/rechten Seitenelements 42
- 43: zweites/linkes Seitenelement
- 43a: Längsbereich des zweiten/linken Seitenelements 43
- 43b: Querbereich des zweiten/linken Seitenelements 43
- 44: Deckelhalterung
- 45: Schwenkelemente; Scharniere
- 46: Deckelelement
- 46a: erstes/vorderes/unteres Deckelelementteil
- 46aa: erstes/rechtes Seitenelement des ersten/vorderen/unteren Deckelelementteils 46a
- 46ab: zweites/linkes Seitenelement des ersten/vorderen/unteren Deckelelementteils 46a
- 46ac: Mittelelement des ersten/vorderen/unteren Deckelelementteils 46a
- 46b: zweites/hinteres/oberes Deckelelementteil
- 46ba: erstes/rechtes Seitenelement des zweiten/hinteren/oberen Deckelelementteils 46b
- 46bb: zweites/linkes Seitenelement des zweiten/hinteren/oberen Deckelelementteils 46b
- 46bc: Mittelelement des zweiten/hinteren/oberen Deckelelementteils 46b
- 47: Verschlusselemente

- 5: hinteres Aufnahmeelementteil eines Aufnahmeelements 4, 5 /einer Ladefläche 4, 5 /einer Ladewanne 4, 5 /einer Ladekiste 4, 5
- 50: Querelement
- 51: Bodenelement
- 52: erstes/rechtes Seitenelement
- 52a: Längsbereich des ersten/rechten Seitenelements 52
- 52b: Querbereich des ersten/rechten Seitenelements 52
- 53: zweites/linkes Seitenelement
- 53a: Längsbereich des zweiten/linken Seitenelements 53
- 53b: Querbereich des zweiten/linken Seitenelements 53
- 54: Verschlusselementaufnahmen

- 6: Last

- 7: Seilaufnahme; Kabeltrommel
- 70: Gehäuse der Seilaufnahme 7
- 71: Stützelement der Seilaufnahme 7
- 72: Eingangsöffnungen der Seilaufnahme 7
- 73: Ausgangsöffnung der Seilaufnahme 7
- 74: Schlauch für Lenkseile 17
- 75: Schlauch für Bremsseile 18
- 76: Schlauchhalterung für Lenkseile 17

## Patentansprüche

1. Lastenfahrrad (3)
mit einem Rahmen (1, 2)
mit einem vorderen Rahmenteil (1) und
mit einem hinteren Rahmenteil (2), und
mit einem Aufnahmeelement (4, 5) zur Aufnahme von Lasten,
wobei die beiden Rahmenteile (1, 2) gegenüber einander in der Längsrichtung (X) derart beweglich ausgebildet sind, so dass das Lastenrad (3) in seiner Länge veränderlich ist,
wobei
das Aufnahmeelement (4, 5) ein vorderes Aufnahmeelementteil (4) aufweist, welches mit dem vorderen Rahmenteil (1) unbeweglich verbunden und mittels des vorderen Rahmenteils (1) mit dem hinteren Rahmenteil (2) beweglich verbunden ist, und dass
das Aufnahmeelement (4, 5) ein hinteres Aufnahmeelementteil (5) aufweist, welches mit dem hinteren Rahmenteil (2) unbeweglich verbunden und mittels des hinteren Rahmenteils (2) mit dem vorderen Rahmenteil (1) beweglich verbunden ist,
so dass das Aufnahmeelement (4, 5) aufgrund der Beweglichkeit der beiden Rahmenteile (1; 2) zueinander in seiner Länge veränderlich ist, **dadurch gekennzeichnet, dass**
das vordere Aufnahmeelementteil (4) ein Bodenelement (41) und
das hintere Aufnahmeelementteil (5) ein Bodenelement (51) aufweist,
wobei das Bodenelement (41) des vorderen Aufnahmeelementteils (4) oberhalb des Bodenelements (51) des hinteren Aufnahmeelementteils (5) angeordnet ist, oder umgekehrt.

2. Lastenfahrrad (3) nach Anspruch 1, **dadurch gekennzeichnet, dass**
das vordere Aufnahmeelementteil (4) ein erstes Seitenelement (42) und ein zweites Seitenelement (43) aufweist, welche in der Querrichtung (Y) zueinander beabstandet und einander gegenüberliegend beidseitig des Bodenelements (41) angeordnet sind, und
das hintere Aufnahmeelementteil (5) ein erstes Seitenelement (52) und ein zweites Seitenelement (53) aufweist, welche in der Querrichtung (Y) zueinander beabstandet und einander gegenüberliegend beidseitig des Bodenelements (51) angeordnet sind,
wobei die Seitenelemente (42, 43) des vorderen Aufnahmeelementteils (4) innerhalb der Seitenelemente (52, 53) des hinteren Aufnahmeelementteils (5) angeordnet sind, oder umgekehrt.

3. Lastenfahrrad (3) nach Anspruch 2, **dadurch gekennzeichnet, dass**
das vordere Aufnahmeelementteil (4) ein Querelement (40) aufweist, welches mit dem vorderen Rahmenteil (1) verbunden ist, und
das hintere Aufnahmeelementteil (5) ein Querelement (50) aufweist, welches mit dem hinteren Rahmenteil (2) verbunden ist,
wobei die Seitenelemente (42; 43) des vorderen Aufnahmeelementteils (4) und die Seitenelemente (52; 53) des hinteren Aufnahmeelementteils (5) jeweils einen Querbereich (42b; 43b; 53a; 53b) aufweisen, welcher gegenüber dem jeweiligen Querelement (40; 50) in der Querrichtung (Y) derart beweglich ausgebildet ist, so dass das Aufnahmeelement (4, 5) in seiner Breite veränderlich ist.

4. Lastenfahrrad (3) nach Anspruch 2 oder 3, **dadurch gekennzeichnet, dass**
die Seitenelemente (42, 43) des vorderen Aufnahmeelementteils (4) und die Seitenelemente (52, 53) des hinteren Aufnahmeelementteils (5) in der Höhe (Z) jeweils zweigeteilt und gegenüber einander derart beweglich ausgebildet sind, so dass das Aufnahmeelement (4, 5) in seiner Höhe veränderlich ist.

5. Lastenfahrrad (3) nach einem der vorangehenden Ansprüche, **dadurch gekennzeichnet, dass**
das vordere Aufnahmeelementteil (4) und/oder das hintere Aufnahmeelementteil (5) ein Deckelelement (46) aufweist, welches ausgebildet ist, das Aufnahmeelement (4, 5) von oben abzudecken,
wobei das Deckelelement (46) ein erstes Deckelelementteil (46a) und ein zweites Deckelelementteil (46b) aufweist, welche gegenüber einander in der Längsrichtung (X) derart beweglich ausgebildet sind, so dass das Deckelelement (46) in seiner Länge veränderlich ist.

6. Lastenfahrrad (3) nach Anspruch 5, **dadurch gekennzeichnet, dass**
das erste Deckelelementteil (46a) beweglich, vorzugsweise schwenkbar, mit dem vorderen Aufnahmeelementteil (4) verbunden ist, und/oder
das zweite Deckelelementteil (46b) beweglich, vorzugsweise schwenkbar, mit dem hinteren Aufnahmeelementteil (5) verbunden ist.

7. Lastenfahrrad (3) nach Anspruch 6, **dadurch gekennzeichnet, dass**
das erste Deckelelementteil (46a) ein Mittelelement (46ac) aufweist,
das erste Deckelelementteil (46a) ein erstes Seitenelement (46aa) und ein zweites Seitenelement (46ab) aufweist, welche in der Querrichtung (Y) zueinander beabstandet und einander gegenüberliegend beidseitig des Mittelelements (46ac) angeordnet sind,
das zweite Deckelelementteil (46b) ein Mittelelement (46bc) aufweist, und
das zweite Deckelelementteil (46b) ein erstes Seitenelement (46ba) und ein zweites Seitenelement (46bb) aufweist, welche in der Querrichtung (Y) zueinander beabstandet und einander gegenüberliegend beidseitig des Mittelelements (46bc) angeordnet sind,
wobei die Seitenelemente (46aa; 46ab) des ersten Deckelelementteils (46a) und die Seitenelemente (46ba; 46bb) des zweiten Deckelelementteils (46b) jeweils gegenüber dem jeweiligen Mittelelement (46ac; 46bc) in der Querrichtung (Y) derart beweglich ausgebildet sind, so dass das Deckelelement (46) in seiner Breite veränderlich ist,
wobei vorzugweise die Seitenelemente (46aa; 46ab) des ersten Deckelelementteils (46a) und die Seitenelemente (46ba; 46bb) des zweiten Deckelelementteils (46b) jeweils unterhalb des jeweiligen Mittelelements (46ac; 46bc) angeordnet sind.

8. Lastenfahrrad (3) nach einem der Ansprüche 5 bis 7, **dadurch gekennzeichnet, dass**
das Deckelelement (46) verschließbar ausgebildet ist.

9. Lastenfahrrad (3) nach einem der vorangehenden Ansprüche, **dadurch gekennzeichnet, dass** der vordere Rahmenteil (1) eine vordere Teleskopstrebe (10) und
der hintere Rahmenteil (2) eine hintere Teleskopstrebe (20) aufweist,
wobei die vordere Teleskopstrebe (10) innerhalb der hinteren Teleskopstrebe (20) verläuft, oder umgekehrt, so dass die beiden Rahmenteile (1; 2) gegenüber einander in der Längsrichtung (X) teleskopartig beweglich und, vorzugsweise stufenlos, fixierbar sind,
wobei vorzugsweise die vordere Teleskopstrebe (10) wenigstens ein Schutzelement aufweist, welches feststehend an der vorderen Teleskopstrebe (10) der hinteren Teleskopstrebe (20) zugewandt angeordnet ist, oder umgekehrt, und
wobei das Schutzelement ausgebildet ist, die Teleskopstreben (10, 20) gegenüber einander vor Abrieb zu schützen und /oder die Reibung zwischen den Teleskopstreben (10, 20) zu erhöhen.

10. Lastenfahrrad (3) nach Anspruch 9, **dadurch gekennzeichnet, dass**
die Teleskopstreben (10, 20) zueinander korrespondierend trapezförmig ausgebildet sind.

11. Lastenfahrrad (3) nach Anspruch 9 oder 10, **gekennzeichnet durch**
wenigstens ein Fixierungselement (21) zur, vorzugsweise stufenlosen, Fixierung der vorderen Teleskopstrebe (10) in der hinteren Teleskopstrebe (20), oder umgekehrt.

12. Lastenfahrrad (3) nach Anspruch 11, **dadurch gekennzeichnet, dass**
das Fixierungselement (21) ein Halterungselement (21c) aufweist, welches in einer korrespondierenden Führung (10a) der inneren Teleskopstrebe (10) angeordnet ist,
wobei das Halterungselement (21c) ausgebildet ist, in einem gelösten Zustand in der Führung (10a) der inneren Teleskopstrebe (10) in der Längsrichtung (X) beweglich und in einem arretierten Zustand in der Führung (10a) der inneren Teleskopstrebe (10) in der Längsrichtung (X) unbeweglich zu sein,
wobei das Fixierungselement (21) ausgebildet ist, die Beweglichkeit des Halterungselements (21c) in der Längsrichtung (X) kraftschlüssig und/oder formschlüssig zu verhindern,
wobei vorzugsweise das Halterungselement (21c) als Nutenstein (21c) und die Führung (10a) der inneren Teleskopstrebe (10) als Nut (10a) ausgebildet ist, und/oder
wobei vorzugsweise das Halterungselement (21c) ausgebildet ist, mittels eines Handgriffs (21a) mit Exzenterkopf gegenüber der äußeren Teleskopstrebe (20) in einem arretierten Zustand gespannt und in einem gelösten Zustand entspannt zu werden.

13. Lastenfahrrad (3) nach einem der vorangehenden Ansprüche, **gekennzeichnet durch**
eine Lenkeinrichtung (14, 15, 17) mit einem Lenkbügel (15), einer Lenkstange (14) und wenigstens zwei Lenkseilen (17), welche ausgebildet ist, eine Lenkbewegung eines Benutzers auf ein Vorderrad (30) zu übertragen,
mit wenigstens einer Seilaufnahme (7), welche von wenigstens einem der Lenkseile (17), vorzugsweise von beiden Lenkseilen (17), durchlaufen wird,
wobei das Lenkseile (17), vorzugsweise beide Lenkseile (17) gemeinsam, in einem Schlauch (74) verläuft und gegenüber dem Schlauch (74) in seiner länglichen Erstreckungsrichtung beweglich ist, wobei die Seilaufnahme (7) eine Schlauchhalterung (76) aufweist, welche ausgebildet ist, den Schlauch (74) zu halten und das Lenkseil (17) beweglich zu führen.

14. Lastenfahrrad (3) nach Anspruch 13, **dadurch gekennzeichnet, dass**
die Seilaufnahme (7) ein Gehäuse (70) aufweist, welches ausgebildet ist, den Schlauch (74) schlaufenförmig, vorzugsweise um ein Stützelement (71) herum, in seinem Inneren zu führen.

## Claims

1. Cargo bicycle (3) comprising a frame (1, 2) having a front frame part (1) and a rear frame part (2), and a receiving element (4, 5) for receiving loads,
the two frame parts (1, 2) being designed to be movable relative to one another in the longitudinal direction (X) such that the length of the cargo bicycle (3) is variable,
the receiving element (4, 5) having a front receiving element part (4) which is immovably connected to the front frame part (1) and is movably connected to the rear frame part (2) by means of the front frame part (1), and
the receiving element (4, 5) having a rear receiving element part (5) which is immovably connected to the rear frame part (2) and is movably connected to the front frame part (1) by means of the rear frame part (2),
such that the length of the receiving element (4, 5) is variable due to the mobility of the two frame parts (1; 2) with respect to one another,
**characterized in that**
the front receiving element part (4) has a bottom element (41) and
the rear receiving element part (5) has a bottom element (51),
the bottom element (41) of the front receiving element part (4) being arranged above the bottom element (51) of the rear receiving element part (5), or vice versa.

2. Cargo bicycle (3) according to claim 1, **characterized in that**
the front receiving element part (4) has a first lateral element (42) and a second lateral element (43) which are spaced apart from one another in the transverse direction (Y) and are arranged opposite one another on both sides of the bottom element (41), and
the rear receiving element part (5) has a first lateral element (52) and a second lateral element (53) which are spaced apart from one another in the transverse direction (Y) and are arranged opposite one another on both sides of the bottom element (51),
the lateral elements (42, 43) of the front receiving element part (4) being arranged inside the lateral elements (52, 53) of the rear receiving element part (5), or vice versa.

3. Cargo bicycle (3) according to claim 2, **characterized in that**
the front receiving element part (4) has a transverse element (40) which is connected to the front frame part (1), and
the rear receiving element part (5) has a transverse element (50) which is connected to the rear frame part (2),
the lateral elements (42; 43) of the front receiving element part (4) and the lateral elements (52; 53) of the rear receiving element part (5) each having a transverse region (42b; 43b; 53a; 53b) which is designed to be movable relative to the relevant transverse element (40; 50) in the transverse direction (Y) such that the width of the receiving element (4, 5) is variable.

4. Cargo bicycle (3) according to either claim 2 or claim 3, **characterized in that**
the lateral elements (42, 43) of the front receiving element part (4) and the lateral elements (52, 53) of the rear receiving element part (5) are each divided into two parts in the vertical direction (Z) and are designed to be movable relative to one another such that the height of the receiving element (4, 5) is variable.

5. Cargo bicycle (3) according to any of the preceding claims, **characterized in that**
the front receiving element part (4) and/or the rear receiving element part (5) has a cover element (46) which is designed to cover the receiving element (4, 5) from above, the cover element (46) having a first cover element part (46a) and a second cover element part (46b) which are designed to be movable relative to one another in the longitudinal direction (X) such that the length of the cover element (46) is variable.

6. Cargo bicycle (3) according to claim 5, **characterized in that**
the first cover element part (46a) is movably, preferably pivotably, connected to the front receiving element part (4), and/or
the second cover element part (46b) is movably, preferably pivotably, connected to the rear receiving element part (5).

7. Cargo bicycle (3) according to claim 6, **characterized in that**
the first cover element part (46a) has a central element (46ac),
the first cover element part (46a) has a first lateral element (46aa) and a second lateral element (46ab) which are spaced from one another in the transverse direction (Y) and are arranged opposite one another on both sides of the central element (46ac),
the second cover element part (46b) has a central element (46bc), and
the second cover element part (46b) has a first lateral element (46ba) and a second lateral element (46bb) which are spaced apart from one another in the transverse direction (Y) and are arranged opposite one another on both sides of the central element (46bc),
the lateral elements (46aa; 46ab) of the first cover element part (46a) and the lateral elements (46ba; 46bb) of the second cover element part (46b) each being designed to be movable relative to the relevant central element (46ac; 46bc) in the transverse direction (Y) such that the width of the cover element (46) is variable,
the lateral elements (46aa; 46ab) of the first cover element part (46a) and the lateral elements (46ba; 46bb) of the second cover element part (46b) each being arranged below the relevant central element (46ac; 46bc).

8. Cargo bicycle (3) according to any of claims 5 to 7, **characterized in that**
the cover element (46) is designed to be closable.

9. Cargo bicycle (3) according to any of the preceding claims, **characterized in that**
the front frame part (1) has a front telescopic strut (10) and
the rear frame part (2) has a rear telescopic strut (20),
the front telescopic strut (10) extending inside the rear telescopic strut (20), or vice versa, such that the two frame parts (1; 2) can be moved telescopically relative to one another in the longitudinal direction (X) and can be fixed, preferably in a continuous manner, the front telescopic strut (10) preferably having at least one protective element which is fixedly arranged on the front telescopic strut (10) so as to face the rear telescopic strut (20), or vice versa, and
the protective element being designed to protect the telescopic struts (10, 20) against abrasion with respect to one another and/or to increase the friction between the telescopic struts (10, 20).

10. Cargo bicycle (3) according to claim 9, **characterized in that**
the telescopic struts (10, 20) are designed correspondingly to one another in a trapezoidal shape.

11. Cargo bicycle (3) according to either claim 9 or claim 10, **characterized by**
at least one fixing element (21) for, preferably continuously, fixing the front telescopic strut (10) in the rear telescopic strut (20), or vice versa.

12. Cargo bicycle (3) according to claim 11, **characterized in that**
the fixing element (21) has a holding element (21c) which is arranged in a corresponding guide (10a) of the inner telescopic strut (10),
the holding element (21c) being designed to be movable in the longitudinal direction (X) in the guide (10a) of the inner telescopic strut (10) in a released state, and to be immovable in the longitudinal direction (X) in the guide (10a) of the inner telescopic strut (10) in a locked state,
the fixing element (21) being designed to prevent mobility of the holding element (21c) in the longitudinal direction (X) in a force-fitting and/or form-fitting manner,
the holding element (21c) preferably being designed as a sliding block (21c) and the guide (10a) of the inner telescopic strut (10) being designed as a groove (10a), and/or
the holding element (21c) preferably being designed to be clamped with respect to the outer telescopic strut (20) in a locked state and unclamped in a released state by means of a handle (21a) having an eccentric head.

13. Cargo bicycle (3) according to any of the preceding claims, **characterized by**
a steering device (14, 15, 17) having handle bars (15), a steering rod (14) and at least two steering cables (17), which steering device is designed to transmit a steering movement of a user to a front wheel (30),
comprising at least one cable receptacle (7) which is passed through by at least one of the steering cables (17), preferably the two steering cables (17),
the steering cable (17), preferably the two steering cables (17) together, extending in a tube (74) and being movable in the longitudinal extension direction thereof relative to the tube (74),
the cable receptacle (7) having a tube holder (76) which is designed to hold the tube (74) and to movably guide the steering cable (17).

14. Cargo bicycle (3) according to claim 13, **characterized in that**
the cable receptacle (7) has a housing (70) which is designed to guide the tube (74) in a loop shape, preferably around a supporting element (71), in the interior of said housing.

## Revendications

1. Vélo cargo (3)
comportant un cadre (1, 2)
comportant une partie de cadre avant (1) et
comportant une partie de cadre arrière (2), et
comportant un élément de réception (4, 5) permettant de recevoir des charges,
dans lequel les deux parties de cadre (1, 2) sont conçues mobiles l'une par rapport à l'autre dans la direction longitudinale (X) de telle sorte que la longueur du vélo cargo (3) est variable,
dans lequel
l'élément de réception (4, 5) présente une partie d'élément de réception avant (4), laquelle est reliée immobile à la partie de cadre avant (1) et est reliée mobile à la partie de cadre arrière (2) au moyen de la partie de cadre avant (1), et
l'élément de réception (4, 5) présente une partie d'élément de réception arrière (5), laquelle est reliée immobile à la partie de cadre arrière (2) et est reliée mobile à la partie de cadre avant (1) au moyen de la partie de cadre arrière (2),
de telle sorte que la longueur de l'élément de réception (4, 5) peut être modifiée en raison de la mobilité des deux parties de cadre (1; 2) l'une par rapport à l'autre,
**caractérisé en ce que**
la partie d'élément de réception avant (4) présente un élément de base (41) et
la partie d'élément de réception arrière (5) présente un élément de base (51),
dans lequel l'élément de base (41) de la partie d'élément de réception avant (4) est disposé au-dessus de l'élément de base (51) de la partie d'élément de réception arrière (5), ou vice versa.

2. Vélo cargo (3) selon la revendication 1, **caractérisé en ce que**
la partie d'élément de réception avant (4) présente un premier élément latéral (42) et un second élément latéral (43), lesquels sont espacés l'un de l'autre dans la direction transversale (Y) et sont disposés en face l'un de l'autre des deux côtés de l'élément de base (41), et
la partie d'élément de réception arrière (5) présente un premier élément latéral (52) et un second élément latéral (53), lesquels sont espacés l'un de l'autre dans la direction transversale (Y) et sont disposés en face l'un de l'autre des deux côtés de l'élément de base (51),
dans lequel les éléments latéraux (42, 43) de la partie d'élément de réception avant (4) sont disposés à l'intérieur des éléments latéraux (52, 53) de la partie d'élément de réception arrière (5), ou vice versa.

3. Vélo cargo (3) selon la revendication 2, **caractérisé en ce que**
la partie d'élément de réception avant (4) présente un élément transversal (40), lequel est relié à la partie de cadre avant (1), et
la partie d'élément de réception arrière (5) présente un élément transversal (50), lequel est relié à la partie de cadre arrière (2),
dans lequel les éléments latéraux (42; 43) de la partie d'élément de réception avant (4) et les éléments latéraux (52; 53) de la partie d'élément de réception arrière (5) présentent respectivement une zone transversale (42b; 43b; 53a; 53b), laquelle est conçue pour être mobile par rapport à l'élément transversal respectif (40; 50) dans la direction transversale (Y) de telle sorte que la largeur de l'élément de réception (4, 5) est variable.

4. Vélo cargo (3) selon la revendication 2 ou 3, **caractérisé en ce que**
les éléments latéraux (42, 43) de la partie d'élément de réception avant (4) et les éléments latéraux (52, 53) de la partie d'élément de réception arrière (5) sont respectivement divisés en deux dans la hauteur (Z) et sont conçus pour être mobiles les uns par rapport aux autres de telle sorte que la hauteur de l'élément de réception (4, 5) est variable.

5. Vélo cargo (3) selon l'une des revendications précédentes, **caractérisé en ce que**
la partie d'élément de réception avant (4) et/ou la partie d'élément de réception arrière (5) présentent un élément de recouvrement (46), lequel est conçu pour recouvrir l'élément de réception (4, 5) par le dessus,
dans lequel l'élément de recouvrement (46) présente une première partie d'élément de recouvrement (46a) et une seconde partie d'élément de recouvrement (46b), lesquelles sont conçues pour être mobiles l'une par rapport à l'autre dans la direction longitudinale (X) de telle sorte que la longueur de l'élément de recouvrement (46) est variable.

6. Vélo cargo (3) selon la revendication 5, **caractérisé en ce que**
la première partie d'élément de recouvrement (46a) est reliée mobile, de préférence pivotante, à la partie d'élément de réception avant (4), et/ou
la seconde partie d'élément de recouvrement (46b) est reliée mobile, de préférence pivotante, à la partie d'élément de réception arrière (5).

7. Vélo cargo (3) selon la revendication 6, **caractérisé en ce que** la première partie d'élément de recouvrement (46a) présente un élément central (46ac),
la première partie d'élément de recouvrement (46a) présente un premier élément latéral (46aa) et un second élément latéral (46ab), lesquels sont espacés l'un de l'autre dans la direction transversale (Y) et sont disposés en face l'un de l'autre des deux côtés de l'élément central (46ac),
la seconde partie d'élément de recouvrement (46b) présente un élément central (46bc), et la seconde partie d'élément de recouvrement (46b) présente un premier élément latéral (46ba) et un second élément latéral (46bb), lesquels sont espacés l'un de l'autre dans la direction transversale (Y) et sont disposés en face l'un de l'autre des deux côtés de l'élément central (46bc),
dans lequel les éléments latéraux (46aa; 46ab) de la première partie d'élément de recouvrement (46a) et les éléments latéraux (46ba; 46bb) de la seconde partie d'élément de recouvrement (46b) sont respectivement conçus pour être mobiles par rapport à l'élément central respectif (46ac; 46bc) dans la direction transversale (Y) de telle sorte que la largeur de l'élément de recouvrement (46) est variable,
dans lequel, de préférence, les éléments latéraux (46aa; 46ab) de la première partie d'élément de recouvrement (46a) et les éléments latéraux (46ba; 46bb) de la seconde partie d'élément de recouvrement (46b) sont respectivement disposés en-dessous de l'élément central respectif (46ac; 46bc).

8. Vélo cargo (3) selon l'une des revendications 5 à 7, **caractérisé en ce que**
l'élément de recouvrement (46) est conçu de façon à pouvoir être fermé.

9. Vélo cargo (3) selon l'une des revendications précédentes, **caractérisé en ce que**
la partie de cadre avant (1) présente une entretoise télescopique avant (10) et
la partie de cadre arrière (2) présente une entretoise télescopique arrière (20),
dans lequel l'entretoise télescopique avant (10) s'étend à l'intérieur de l'entretoise télescopique arrière (20), ou vice versa, de telle sorte que les deux parties de cadre (1; 2) sont mobiles et peuvent être fixées, de préférence en continu, télescopiquement l'une par rapport à l'autre dans la direction longitudinale (X),
dans lequel, de préférence, l'entretoise télescopique avant (10) présente au moins un élément de protection, lequel est disposé fixe sur l'entretoise télescopique avant (10) pour faire face à l'entretoise télescopique arrière (20), ou vice versa, et
dans lequel l'élément de protection est conçu pour protéger les entretoises télescopiques (10, 20) l'une de l'autre contre l'abrasion et/ou pour augmenter le frottement entre les entretoises télescopiques (10, 20).

10. Vélo cargo (3) selon la revendication 9, **caractérisé en ce que**
les entretoises télescopiques (10, 20) sont conçues en forme de trapèze de façon à correspondre les unes aux autres.

11. Vélo cargo (3) selon la revendication 9 ou 10, **caractérisé par**
au moins un élément de fixation (21) permettant de fixer, de préférence en continu, l'entretoise télescopique avant (10) dans l'entretoise télescopique arrière (20), ou vice versa.

12. Vélo cargo (3) selon la revendication 11, **caractérisé en ce que**
l'élément de fixation (21) présente un élément de maintien (21c), lequel est disposé dans un guide (10a) correspondant de l'entretoise télescopique intérieure (10),
dans lequel l'élément de maintien (21c) est conçu pour être mobile dans un état libéré dans le guide (10a) de l'entretoise télescopique intérieure (10) dans la direction longitudinale (X) et pour être immobile dans un état verrouillé dans le guide (10a) de l'entretoise télescopique intérieure (10) dans la direction longitudinale (X),
dans lequel l'élément de fixation (21) est conçu pour empêcher la mobilité de l'élément de maintien (21c) dans la direction longitudinale (X) par complémentarité de forme et/ou à force,
dans lequel, de préférence, l'élément de maintien (21c) est conçu comme un coulisseau (21c) et le guide (10a) de l'entretoise télescopique intérieure (10) est conçu comme une rainure (10a), et/ou
dans lequel, de préférence, l'élément de maintien (21c) est conçu pour être tendu par rapport à l'entretoise télescopique extérieure (20) dans un état verrouillé au moyen d'une poignée (21a) comportant une tête excentrique et relâché dans un état libéré.

13. Vélo cargo (3) selon l'une des revendications précédentes, **caractérisé par**
un dispositif de direction (14, 15, 17) comportant un guidon (15), un volant (14) et au moins deux câbles de direction (17), lequel dispositif de direction est conçu pour transmettre un mouvement de direction d'un utilisateur à une roue avant (30),
comportant au moins une réception de câble (7), laquelle est traversée par au moins l'un des câbles de direction (17), de préférence par les deux câbles de direction (17),
dans lequel le câble de direction (17), de préférence les deux câbles de direction (17) conjointement, passe dans un tuyau (74) et est mobile par rapport au tuyau (74) dans sa direction d'étendue longitudinale,
dans lequel la réception de câble (7) présente un moyen de maintien de tuyau (76), lequel est conçu pour maintenir le tuyau (74) et pour guider le câble de direction (17) de manière mobile.

14. Vélo cargo (3) selon la revendication 13, **caractérisé en ce que**
la réception de câble (7) présente un boîtier (70), lequel est conçu pour guider le tuyau (74) sous la forme d'une boucle, de préférence autour d'un élément de support (71), à l'intérieur.
